# EUROPEAN PATENT APPLICATION

(11) **EP 4 837 788 A1**
(43) Date of publication of application: **11.11.2026**
(21) Application number: 25744755.7
(22) Date of filing: 24.01.2025
(51) Int. Cl.: B60R 16/023, B60N 2/02, B60W 40/08

(54) **VEHICLE INFORMATION PROCESSING METHOD AND APPARATUS, ELECTRONIC DEVICE, AND VEHICLE**

(30) Priority: 26.01.2024 CN 202410122840
(71) Applicant: Yinwang Intelligent Technologies Co., Ltd., Shenzhen, Guangdong 518110 (CN)
(72) Inventor: CHEN, Xiaoli, Shenzhen, Guangdong 518129 (CN); YANG, Jinghuan, Shenzhen, Guangdong 518129 (CN); ZHANG, Daiqi, Shenzhen, Guangdong 518129 (CN)
(74) Representative: Pfenning, Meinig & Partner mbB
(86) International application number: PCT/CN2025/074977
(87) International publication number: WO 2025/157292

(57) **Abstract**

A vehicle information processing method and apparatus, an electronic device, and a vehicle are provided. The vehicle information processing method includes: obtaining device data and an in-vehicle image of a vehicle; obtaining in-vehicle spatial information including device position information of an in-vehicle device and passenger feature information based on the device data and the in-vehicle image; and sending adjustment information including one or more pieces of information in the in-vehicle spatial information to a control unit based on a control requirement of the control unit. In this way, after receiving the adjustment information, the control unit can adapt to a change in an in-vehicle environment based on the adjustment information, and perform control adjustment on a control object based on the adjustment information, to improve control effect on the control object and improve vehicle use experience of a user.

## Description

This application claims priority to Chinese Patent Application No. 202410122840.9, filed with the China National Intellectual Property Administration on January 26, 2024 and entitled "VEHICLE INFORMATION PROCESSING METHOD AND APPARATUS, ELECTRONIC DEVICE, AND VEHICLE", which is incorporated herein by reference in its entirety.

### TECHNICAL FIELD

This application relates to the field of vehicle intelligence technologies, and in particular, to a vehicle information processing method and apparatus, an electronic device, and a vehicle.

### BACKGROUND

With the development of vehicle technologies, a user has increasingly high expectations for driving comfort, convenience, and intelligent operation during vehicle driving. To improve vehicle use experience of the user, an increasing quantity of functions are configured on a vehicle. For example, a music play function, an intelligent device adjustment function, and the like are provided for user entertainment.

However, currently, it is difficult for the music play function, the intelligent device adjustment function, and the like to adapt to a change in an in-vehicle spatial environment, making it difficult to provide adaptive personalized interaction experience for the user. This affects effect and results in poor vehicle use experience of the user.

### SUMMARY

Embodiments of this application provide a vehicle information processing method and apparatus, an electronic device, and a vehicle. Changes in an in-vehicle passenger and an in-vehicle device are sensed, so that a control unit can adapt to a change in an in-vehicle environment, to improve control effect on a control object and improve vehicle use experience of a user.

To achieve the foregoing objective, this application uses the following technical solutions.

According to a first aspect, a vehicle information processing method is provided. The method includes: obtaining device data and an in-vehicle image of a vehicle; obtaining in-vehicle spatial information based on the device data and the in-vehicle image, where the in-vehicle spatial information includes device position information of an in-vehicle device and passenger feature information; and sending first adjustment information to a first control unit based on a control requirement of the first control unit, where the first adjustment information includes the device position information of the in-vehicle device and/or the passenger feature information, and the first adjustment information is used by the first control unit to perform control adjustment on a first control object.

In the solution provided in the first aspect, device data and an in-vehicle image of a vehicle are obtained; in-vehicle spatial information including device position information of an in-vehicle device and passenger feature information is obtained based on the device data and the in-vehicle image; and adjustment information including one or more pieces of information in the in-vehicle spatial information is sent to a control unit based on a control requirement of the control unit. In this way, after receiving the adjustment information, the control unit can adapt to a change in an in-vehicle environment based on the adjustment information, and perform control adjustment on a control object based on the adjustment information, to improve control effect on the control object and improve vehicle use experience of a user.

In a possible implementation, the method further includes: sending second adjustment information to a second control unit based on a control requirement of the second control unit, where the second adjustment information include the device position information of the in-vehicle device and/or the passenger feature information, and the second adjustment information is the same as the first adjustment information, or the second adjustment information is different from the first adjustment information. In this way, the in-vehicle spatial information is obtained by using the device data and the in-vehicle image; and corresponding adjustment information is sent to the control unit based on the in-vehicle spatial information and the control requirement of the control unit. This can avoid a case in which different control units repeatedly collect required adjustment information when performing control adjustment on control objects, thereby saving computing power resources and improving efficiency.

In a possible implementation, obtaining the in-vehicle spatial information based on the device data and the in-vehicle image includes: obtaining position change data of the in-vehicle device based on current adjustment data and initial adjustment data of the in-vehicle device in the device data, and a motion model of the in-vehicle device, where the motion model represents a motion pattern of the in-vehicle device when adjustment data changes; obtaining the device position information of the in-vehicle device based on the position change data of the in-vehicle device and initial position information of the in-vehicle device; and performing object detection on the in-vehicle image to obtain the passenger feature information. In this way, spatial positions of an in-vehicle passenger and the in-vehicle device are sensed, so that the control unit can adapt to a change in an in-vehicle environment in a timely manner, to implement adaptive adjustment on the in-vehicle device, and improve adjustment effect.

In a possible implementation, performing object detection on the in-vehicle image to obtain the passenger feature information includes: performing object detection on the in-vehicle image to obtain passenger part position information and passenger distribution information; obtaining passenger height information based on the passenger part position information and the device position information; and obtaining passenger size information based on the passenger height information, where the passenger feature information includes at least one of the passenger part position information, the passenger distribution information, and the passenger size information. In this way, the passenger and the in-vehicle device are spatially located to estimate the passenger size information. Therefore, when control adjustment is performed by using the passenger size information, the passenger distribution information, the passenger part position information, and the device position information, personalized intelligent adjustment can be performed for each user.

In a possible implementation, when the first control unit is an audio control unit, the first adjustment information includes at least one of device position information of a play device and device position information of a seat device in the in-vehicle device, the passenger distribution information, and passenger ear position information in the passenger part position information. In this way, the device position information of the play device, the device position information of the seat device, the passenger ear position information, and the passenger distribution information are used in the audio control unit, so that the audio control unit can adapt to a change in an in-vehicle spatial environment based on the device position information of the play device, the device position information of the seat device, the passenger ear position information, and the passenger distribution information. This implements real-time control adjustment on audio play, implements more intelligent audio adjustment, and improves audio adjustment effect, so that the passenger has better audio experience.

In a possible implementation, when the first control unit is a seat adjustment control unit, the first adjustment information includes at least one of device position information of a seat device in the in-vehicle device, the passenger size information, and passenger eye position information in the passenger part position information. In this way, the device position information of the seat device, the passenger eye position information, and the passenger size information are used in the seat adjustment control unit, so that the seat adjustment control unit can implement personalized intelligent seat adjustment for each user based on the device position information of the seat device, the passenger eye position information, and the passenger size information.

In a possible implementation, when the first control unit is a steering wheel adjustment control unit, the first adjustment information includes at least one of passenger eye position information and the passenger size information. In this way, the passenger eye position information and the passenger size information are used in the steering wheel adjustment control unit, so that the steering wheel adjustment control unit can implement personalized intelligent steering wheel adjustment for each user based on the passenger eye position information and the passenger size information.

In a possible implementation, when the first control unit is a rearview mirror adjustment control unit or a head-up display adjustment control unit, the first adjustment information includes at least one of passenger eye position information in the passenger part position information. In this way, the sensed passenger eye position information is used in the rearview mirror adjustment control unit and the head-up display adjustment control unit, to implement personalized intelligent rearview mirror adjustment and personalized intelligent head-up display device adjustment for each user.

In a possible implementation, the method further includes: receiving a subscription request of the first control unit through a subscription interface; and obtaining the control requirement of the first control unit based on the subscription request. In this way, the control requirement of the control unit can be obtained through subscription, and required adjustment information can be sent to the control unit in a timely manner, so that the control unit can adapt to a change in an in-vehicle environment in a timely manner, to improve control effect on the control object.

In a possible implementation, sending the first adjustment information to the first control unit includes: when a call request of the first control unit is received, sending the first adjustment information to the first control unit based on a control requirement in the adjustment request. In this way, required adjustment information can be sent to the control unit in a timely manner, so that the control unit can adapt to a change in an in-vehicle environment in a timely manner, to improve control effect on the control object.

In a possible implementation, the method further includes: performing accuracy verification on the device position information and the passenger part position information in the passenger feature information based on a relative position relationship between a passenger part and a device. In this way, information accuracy can be improved, and control effect of the control unit on the in-vehicle device can be improved.

According to a second aspect, a vehicle information processing apparatus is provided. The vehicle information processing apparatus includes: an obtaining module, configured to obtain device data and an in-vehicle image of a vehicle; an information sensing module, configured to obtain in-vehicle spatial information based on the device data and the in-vehicle image, where the in-vehicle spatial information includes device position information of an in-vehicle device and passenger feature information; and an information sending module, configured to send first adjustment information to a first control unit based on a control requirement of the first control unit, where the first adjustment information includes the device position information of the in-vehicle device and/or the passenger feature information, and the first adjustment information is used by the first control unit to perform control adjustment on a first control object.

In the solution provided in the second aspect, device data and an in-vehicle image of a vehicle are obtained; in-vehicle spatial information including device position information of an in-vehicle device and passenger feature information is obtained based on the device data and the in-vehicle image; and adjustment information including one or more pieces of information in the in-vehicle spatial information is sent to a control unit based on a control requirement of the control unit. In this way, after receiving the adjustment information, the control unit can adapt to a change in an in-vehicle environment based on the adjustment information, and perform control adjustment on a control object based on the adjustment information, to improve control effect on the control object and improve vehicle use experience of a user.

In a possible implementation, the information sending module is further configured to send second adjustment information to a second control unit based on a control requirement of the second control unit, where the second adjustment information include the device position information of the in-vehicle device and/or the passenger feature information, and the second adjustment information is the same as the first adjustment information, or the second adjustment information is different from the first adjustment information. In this way, the in-vehicle spatial information is obtained by using the device data and the in-vehicle image; and corresponding adjustment information is sent to the control unit based on the in-vehicle spatial information and the control requirement of the control unit. This can avoid a case in which different control units repeatedly collect required adjustment information when performing control adjustment on control objects, thereby saving computing power resources and improving efficiency.

In a possible implementation, the information sensing module is configured to: obtain position change data of the in-vehicle device based on current adjustment data and initial adjustment data of the in-vehicle device in the device data, and a motion model of the in-vehicle device, where the motion model represents a motion pattern of the in-vehicle device when adjustment data changes; obtain the device position information of the in-vehicle device based on the position change data of the in-vehicle device and initial position information of the in-vehicle device; and perform object detection on the in-vehicle image to obtain the passenger feature information. In this way, spatial positions of an in-vehicle passenger and the in-vehicle device are sensed, so that the control unit can adapt to a change in an in-vehicle environment in a timely manner, to implement adaptive adjustment on the in-vehicle device, and improve adjustment effect.

In a possible implementation, the information sensing module is specifically configured to: perform object detection on the in-vehicle image to obtain passenger part position information and passenger distribution information; obtain passenger height information based on the passenger part position information and the device position information; and obtain passenger size information based on the passenger height information, where the passenger feature information includes at least one of the passenger part position information, the passenger distribution information, and the passenger size information. In this way, the passenger and the in-vehicle device are spatially located to estimate the passenger size information. Therefore, when control adjustment is performed by using the passenger size information, the passenger distribution information, the passenger part position information, and the device position information, personalized intelligent adjustment can be performed for each user.

In a possible implementation, when the first control unit is an audio control unit, the first adjustment information includes at least one of device position information of a play device and device position information of a seat device in the in-vehicle device, the passenger distribution information, and passenger ear position information in the passenger part position information. In this way, the device position information of the play device, the device position information of the seat device, the passenger ear position information, and the passenger distribution information are used in the audio control unit, so that the audio control unit can adapt to a change in an in-vehicle spatial environment based on the device position information of the play device, the device position information of the seat device, the passenger ear position information, and the passenger distribution information. This implements real-time control adjustment on audio play, implements more intelligent audio adjustment, and improves audio adjustment effect, so that the passenger has better audio experience.

In a possible implementation, when the first control unit is a seat adjustment control unit, the first adjustment information includes at least one of device position information of a seat device in the in-vehicle device, the passenger size information, and passenger eye position information in the passenger part position information. In this way, the device position information of the seat device, the passenger eye position information, and the passenger size information are used in the seat adjustment control unit, so that the seat adjustment control unit can implement personalized intelligent seat adjustment for each user based on the device position information of the seat device, the passenger eye position information, and the passenger size information.

In a possible implementation, when the first control unit is a steering wheel adjustment control unit, the first adjustment information includes at least one of passenger eye position information and the passenger size information. In this way, the passenger eye position information and the passenger size information are used in the steering wheel adjustment control unit, so that the steering wheel adjustment control unit can implement personalized intelligent steering wheel adjustment for each user based on the passenger eye position information and the passenger size information.

In a possible implementation, when the first control unit is a rearview mirror adjustment control unit or a head-up display adjustment control unit, the first adjustment information includes at least one of passenger eye position information in the passenger part position information. In this way, the sensed passenger eye position information is used in the rearview mirror adjustment control unit and the head-up display adjustment control unit, to implement personalized intelligent rearview mirror adjustment and personalized intelligent head-up display device adjustment for each user.

In a possible implementation, the information sending module is further configured to: receive a subscription request of the first control unit through a subscription interface; and obtain the control requirement of the first control unit based on the subscription request. In this way, the control requirement of the control unit can be obtained through subscription, and required adjustment information can be sent to the control unit in a timely manner, so that the control unit can adapt to a change in an in-vehicle environment in a timely manner, to improve control effect on the control object.

In a possible implementation, the information sending module is further configured to: when a call request of the first control unit is received, send the first adjustment information to the first control unit based on a control requirement in the adjustment request. In this way, required adjustment information can be sent to the control unit in a timely manner, so that the control unit can adapt to a change in an in-vehicle environment in a timely manner, to improve control effect on the control object.

In a possible implementation, the information sensing module is further configured to perform accuracy verification on the device position information and the passenger part position information in the passenger feature information based on a relative position relationship between a passenger part and a device. In this way, information accuracy can be improved, and control effect of the control unit on the in-vehicle device can be improved.

According to a third aspect, an electronic device is provided, including: a memory, configured to store computer program instructions; and a processor, configured to execute the computer program instructions, to support the electronic device in implementing the method according to any possible implementation of the first aspect.

According to a fourth aspect, a vehicle is provided, including: a memory, configured to store computer program instructions; and a processor, configured to execute the computer program instructions, to support the vehicle in implementing the method according to any possible implementation of the first aspect.

According to a fifth aspect, a computer-readable storage medium is provided. The computer-readable storage medium stores computer program instructions. When the computer program instructions are executed by a processing circuit, the method according to any possible implementation of the first aspect is implemented.

According to a sixth aspect, a computer program product including instructions is provided. When the computer program product runs on a computer, the computer is enabled to perform method according to any possible implementation of the first aspect.

According to a seventh aspect, a chip system is provided. The chip system includes a processing circuit and a storage medium. The storage medium stores computer program instructions. When the computer program instructions are executed by the processing circuit, the method according to any possible implementation of the first aspect is implemented.

### BRIEF DESCRIPTION OF DRAWINGS

FIG. 1 is a diagram of a structure of a vehicle according to an embodiment of this application;
FIG. 2 is a schematic flowchart 1 of a vehicle information processing method according to an embodiment of this application;
FIG. 3 is a schematic flowchart of determining device position information according to an embodiment of this application;
FIG. 4 is a schematic flowchart of determining passenger part position information according to an embodiment of this application;
FIG. 5 is a schematic flowchart of determining passenger size information according to an embodiment of this application;
FIG. 6 is a diagram of interaction between a vehicle information processing apparatus and a control unit according to an embodiment of this application;
FIG. 7 is a diagram of interaction between a vehicle information processing apparatus and an audio control unit according to an embodiment of this application;
FIG. 8 is a diagram of interaction between a vehicle information processing apparatus and a seat adjustment control unit according to an embodiment of this application;
FIG. 9 is a diagram of interaction between a vehicle information processing apparatus and a steering wheel adjustment control unit according to an embodiment of this application;
FIG. 10 is a diagram of interaction between a vehicle information processing apparatus and a rearview mirror adjustment control unit according to an embodiment of this application;
FIG. 11 is a diagram of interaction between a vehicle information processing apparatus and a HUD adjustment control unit according to an embodiment of this application;
FIG. 12 is a schematic flowchart 2 of a vehicle information processing method according to an embodiment of this application;
FIG. 13 is a diagram of a principle of coordinate system conversion according to an embodiment of this application; and
FIG. 14 is a diagram of a principle of a vehicle information processing method according to an embodiment of this application.

### DESCRIPTION OF EMBODIMENTS

The following describes the technical solutions in embodiments of this application with reference to the accompanying drawings in embodiments of this application.

It should be noted that collection, storage, use, processing, transmission, provision, disclosure, and the like of personal user information in the technical solutions in this application all comply with related laws and regulations, and do not violate public order and good morals. For example, in the technical solutions in this application, the personal user information is processed with user authorization. This is uniformly described herein and is not described below.

Terms "including", "having", and any other variants thereof in descriptions of embodiments of this application are intended to cover a non-exclusive inclusion. For example, a process, a method, a system, a product, or a device that includes a series of steps or units is not limited to listed steps or units, but optionally further includes other unlisted steps or units, or optionally further includes another step or unit inherent to the process, the method, the product, or the device.

The following terms "first", "second", and the like are merely used for description, and shall not be understood as an indication or implication of relative importance or an implicit indication of a quantity of indicated technical features. Therefore, a feature limited by "first", "second", or the like may explicitly or implicitly include one or more features.

In embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner.

In the descriptions of embodiments of this application, unless otherwise stated, "a plurality of" means two or more. The term "and/or" in this specification describes only an association relationship between associated objects and represents that three relationships may exist. For example, A and/or B may represent the following three cases: Only A exists, both A and B exist, and only B exists.

As described in the background, with the development of vehicle technologies, a user has increasingly high expectations for driving comfort, convenience, and intelligent operation during vehicle driving. To improve vehicle use experience of the user, an increasing quantity of functions are configured on a vehicle. For example, a music play function, an intelligent device adjustment function, and the like are provided for user entertainment.

However, currently, it is difficult for the music play function, the intelligent device adjustment function, and the like to adapt to a change in an in-vehicle spatial environment, making it difficult to provide adaptive personalized interaction experience for the user. This affects effect and results in poor vehicle use experience of the user.

For example, in-vehicle audio for music play is used as an example for description. The in-vehicle audio usually needs to use a sound replay or noise reduction technology or another technology to provide better audio experience for an in-vehicle user. However, when an in-vehicle acoustic environment changes, for example, an ear moves, a loudspeaker position moves, a seat position moves, person distribution changes, and/or the like, it is difficult for the in-vehicle audio to adapt to the change in the environment, resulting in poor audio effect and affecting audio experience of the in-vehicle user.

For another example, for some in-vehicle hardware such as a rearview mirror, a head-up display (head-up display, HUD) device, a seat, a steering wheel, and the like, when a position of the hardware changes, an in-vehicle user changes, person distribution changes, and/or the like, during adjustment of the hardware, personalized intelligent adjustment cannot be performed for each in-vehicle person, and only fixed position adjustment can be performed, resulting in poor use effect and affecting vehicle use experience of the user.

In addition, currently, some functions are adjusted based on same information, and information corresponding to adjustment of each function is separately collected by a control unit/adjustment unit. Consequently, the same information is repeatedly collected by different control units/adjustment units, resulting in a waste of resources. For example, for rearview mirror adjustment and head-up display device adjustment, passenger eye information is required. Therefore, when rearview mirror adjustment and head-up display device adjustment are performed, both a rearview mirror adjustment unit and a head-up display device adjustment unit need to collect the passenger eye information. Consequently, the passenger eye information is repeatedly collected, resulting in a waste of resources.

Based on the foregoing research, embodiments of this application provide a vehicle information processing method. Device data and an in-vehicle image of a vehicle are obtained; in-vehicle spatial information including device position information of an in-vehicle device and passenger feature information is obtained based on the device data and the in-vehicle image; and adjustment information including one or more pieces of information in the in-vehicle spatial information is sent to a control unit based on a control requirement of the control unit. In this way, after receiving the adjustment information, the control unit can adapt to a change in an in-vehicle environment based on the adjustment information, and perform control adjustment on a control object based on the adjustment information, to improve control effect on the control object. In addition, in embodiments of this application, control adjustment on the control object is implemented based on the passenger feature information and the device position information, to implement personalized intelligent adjustment experience for each user, and improve vehicle use experience of the user.

In addition, in embodiments of this application, the in-vehicle spatial information is obtained by using the device data and the in-vehicle image; and corresponding adjustment information is sent to the control unit based on the in-vehicle spatial information. This can avoid a case in which different control units repeatedly collect required adjustment information when performing control adjustment on control objects, thereby saving resources and improving efficiency.

The vehicle information processing method provided in embodiments of this application may be applied to a plurality of in-cabin interaction scenarios of a vehicle, including but not limited to an audio control scenario, an intelligent seat adjustment scenario, an intelligent steering wheel adjustment scenario, an intelligent rearview mirror adjustment scenario, and an intelligent HUD adjustment scenario.

In an example, the vehicle in embodiments of this application may be a transportation means (for example, a car, a bus, a subway, a high-speed train, a motorcycle, a flying car, a train, or the like), an industrial vehicle (for example, a forklift, a trailer, a tractor, or the like), an engineering vehicle (for example, an excavator, a bulldozer, a crane, or the like), an agricultural device (for example, a lawn mower, a harvester, or the like), a recreation device, a toy vehicle, a ship, a hovercraft, a submarine, an airplane, a helicopter, or the like. A specific type, form, function, and the like of the vehicle are not limited in embodiments of this application.

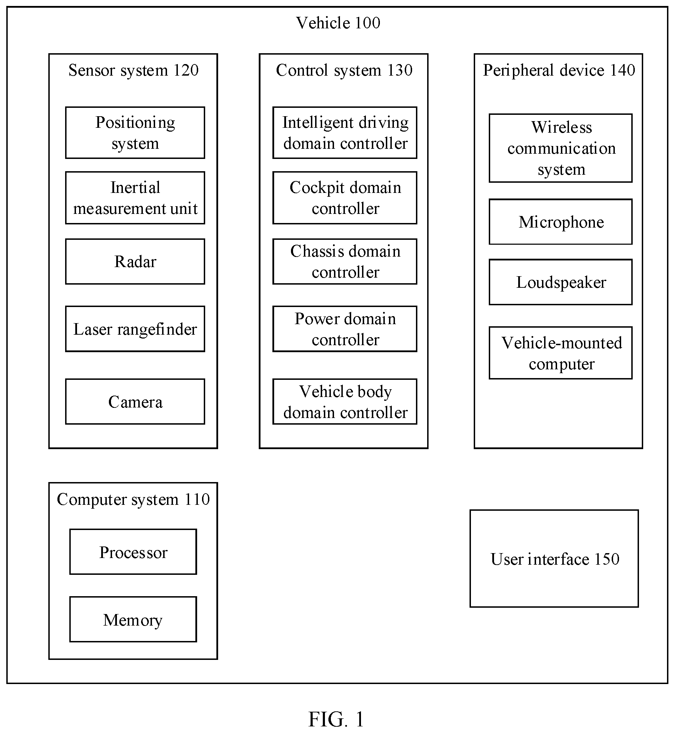

For ease of understanding, the following first describes a structure of the vehicle. FIG. 1 is a diagram of a structure of a vehicle according to an embodiment of this application. As shown in FIG. 1, the vehicle 100 provided in this embodiment of this application includes various subsystems, for example, a computer system 110, a sensor system 120, a control system 130, one or more peripheral devices 140, and a user interface 150.

It may be understood that the vehicle 100 may alternatively include more or fewer subsystems, and each subsystem may include a plurality of components. For example, the vehicle 100 may further include a traveling system, a power supply, and the like. Specifically, details are not described in this embodiment of this application. It may be understood that all the subsystems and components in the vehicle 100 may be interconnected in a wired or wireless manner.

The sensor system 120 may include several sensors that sense and measure information about an environment around the vehicle 100. For example, the sensor system 120 may include a positioning system (the positioning system may be a global positioning system GPS system, a BeiDou system, or another positioning system), an inertial measurement unit (inertial measurement unit, IMU), a radar, a laser rangefinder, and a camera.

The positioning system may be configured to estimate a geographical position of the vehicle 100. The IMU is configured to sense position and orientation changes of the vehicle 100 based on inertial acceleration. In an embodiment, the IMU may be a combination of an accelerometer and a gyroscope. The laser rangefinder may sense, by using a laser, an object in an environment in which the vehicle 100 is located. In some examples, the laser rangefinder may include one or more laser sources, a laser scanner, one or more detectors, and another system component.

In this embodiment of this application, the sensor system 120 may include a plurality of cameras. The camera may be disposed in the vehicle, and may be configured to capture an image in the vehicle. For example, one or more cameras are arranged near a front interior rearview mirror of the vehicle, and the cameras may capture images of passengers in all seats in the vehicle. Alternatively, one or more cameras are arranged in a front row of the vehicle, and are configured to capture an image of a passenger in the front row; or one or more cameras are arranged in a rear row of the vehicle, and are configured to capture an image of a passenger in the rear row. In some examples, the camera may be further configured to capture a plurality of images of a surrounding environment of the vehicle 100.

In some examples, the camera may be a static camera or a video camera. In some examples, the camera may capture a monocular image, or may capture a depth image.

In this embodiment of this application, the radar may be a millimeter-wave radar. The millimeter-wave radar operates on a millimeter-wave (millimeter-wave) band, is mainly configured to detect a moving object, and has an operating frequency band distributed in a 30 GHz to 300 GHz frequency domain (a wavelength is 1 mm to 10 mm). During operation, the millimeter-wave radar continuously transmits (radiates) a specific form of radio magnetic signal, receives an electromagnetic echo signal reflected by an object, and determines spatial information of the object by comparing a difference between the transmitted signal and the received signal. The millimeter-wave radar is characterized by a small volume and high spatial resolution; and is deployed in the vehicle, and may be configured to detect information such as a position of a human body (a passenger) in the vehicle, a physiological feature (for example, a breathing frequency, a heartbeat frequency, and the like), a human body posture, and the like.

In some examples, the radar may further sense an object in the surrounding environment of the vehicle 100 by using a radio signal, and may be specifically represented as a millimeter-wave radar or a lidar. In some examples, in addition to sensing an object, the radar may be further configured to sense a speed and/or a traveling direction of the object.

It may be understood that the foregoing is merely an example description of the sensor system 120 in this embodiment of this application, and is not intended to specifically limit the sensor system 120. For example, the sensor system 120 may further include a pressure sensor, a human body infrared sensor, or the like that is disposed for each seat in the vehicle 100. The pressure sensor or the human body infrared sensor may be configured to measure whether there is a passenger in the seat.

In this embodiment of this application, the control system 130 is configured to control the vehicle 100 and the components in the vehicle 100 to perform corresponding operations. In an example, the control system 130 may include an in-vehicle domain controller.

In some examples, domain controllers may be classified into several domains (also referred to as "functional domains") based on a function of each part of the vehicle, for example, an intelligent driving domain, a cockpit domain, a chassis domain, a power domain, a vehicle body domain, and the like. Based on this, the in-vehicle domain controller may include but is not limited to any one or more of the following: an intelligent driving domain controller, a cockpit domain controller, a chassis domain controller, a power domain controller, and a vehicle body domain controller. The intelligent driving domain controller is mainly configured to provide services such as autonomous driving sensing and decision-making, for example, image information receiving, image information processing and determining, data processing and calculation, navigation and route planning, and quick determining and decision-making for a real-time situation. The intelligent driving domain controller needs to process algorithms at three layers: sensing, decision-making, and control, and has highest requirements on software and hardware of the domain controller. The cockpit domain controller is mainly configured to control various electronic information system functions in an intelligent cockpit of the vehicle, for example, a central control system, an in-vehicle infotainment system, a head-up display, a seat system, an instrument system, a rearview mirror system, a driving behavior monitoring system, a navigation system, and the like. The chassis domain controller is mainly configured to control a driving behavior and a driving posture of the vehicle, and functions of the chassis domain controller include but are not limited to braking system management, vehicle transmission system management, driving system management, steering system management, vehicle speed sensor management, vehicle body posture sensor management, air suspension system management, airbag system management, and the like. The power domain controller is mainly configured to: control a powertrain of the vehicle, optimize power performance of the vehicle, and ensure power safety of the vehicle, for example, engine management, gearbox management, battery management, power distribution management, emission management, speed limit management, fuel saving and power saving management, and the like. The vehicle body domain controller is mainly configured to control various vehicle body functions, including but not limited to control of a vehicle headlight, a vehicle taillight, an interior light, a vehicle door lock, a vehicle window, a skylight, a wiper, an electric trunk, a smart key, an air conditioner, an antenna, gateway communication, and the like.

It may be understood that the control system 130 may alternatively include more or fewer components, and the foregoing description of the control system 130 is not intended to limit the control system 130.

In this embodiment of this application, the vehicle 100 interacts with an external sensor, another vehicle, another computer system, or a user by using the peripheral device 140. The peripheral device 140 may include a wireless communication system, a microphone, a loudspeaker, and/or a vehicle-mounted computer.

The wireless communication system may communicate wirelessly with one or more devices directly or over a communication network. For example, the wireless communication system 146 may use 3G cellular communication, 4G cellular communication, 5G cellular communication, wireless local area network (wireless local area network, WLAN) communication, or the like. In some examples, the wireless communication system may directly communicate with a device through an infrared link, Bluetooth, or ZigBee. Other wireless protocols, for example, various vehicle communication systems such as the wireless communication system, may include one or more dedicated short range communications (dedicated short range communications, DSRC) devices, and these devices may include public and/or private data communication between vehicles and/or roadside stations.

In some examples, after the vehicle 100 may establish a connection to an electronic device (for example, a mobile phone, a wearable device, a tablet computer, or the like) by using the wireless communication system, the electronic device may perform projection through a central control screen of the vehicle 100. In a process in which the electronic device performs projection through the central control screen of the vehicle 100, content displayed on the central control screen of the vehicle 100 may not be exactly the same as screen content of the electronic device, and the content displayed on the central control screen may be an application program configured for the vehicle 100 and a plurality of application programs in a terminal device. That is, when the vehicle 100 is not connected to the electronic device, the vehicle 100 has a user interface (user interface, UI). After the vehicle 100 is connected to the electronic device, there may be an increase in icons of application programs on the UI interface of the vehicle 100, or the vehicle 100 may have more functions.

In an example, after the vehicle 100 is connected to the electronic device, mutual assistance between the electronic device and the vehicle 100 at a hardware layer may be further implemented. For example, the electronic device may use the global positioning system GPS configured on the vehicle 100 to improve navigation precision of the electronic device. For another example, the electronic device may use the camera on the vehicle 100 to make a video call.

In this embodiment of this application, the peripheral device 140 may further provide a means for interacting with the user interface 150 for a user of the vehicle 100. For example, the vehicle-mounted computer may provide information for the user of the vehicle 100. The user interface 150 may further operate the vehicle-mounted computer to receive an input from the user. The vehicle-mounted computer may be operated by using a touchscreen.

In this embodiment of this application, the peripheral device 140 may further provide a means for the vehicle 100 to communicate with another device located in the vehicle. For example, the microphone may receive audio (for example, a voice command or another audio input) from the user of the vehicle 100. Similarly, the loudspeaker may output audio to the user of the vehicle 100.

In this embodiment of this application, the loudspeaker may be disposed on a seat headrest of the vehicle 100, to facilitate audio receiving by a passenger located in a seat. It may be understood that in some examples, the loudspeaker may alternatively be disposed at a center console, four vehicle doors, a roof, a trunk, or another position of the vehicle 100, and may be specifically disposed based on an actual requirement. This is not limited in this embodiment of this application.

In this embodiment of this application, some or all functions of the vehicle 100 are controlled by the computer system 110. The computer system 110 may include at least one processor and a memory. The processor may be a central processing unit (central processing unit, CPU), or may be another specific integrated circuit. The processor may alternatively be another general-purpose processor, a digital signal processor (digital signal processor, DSP), an application-specific integrated circuit ASIC, a field programmable gate array (field programmable gate array, FPGA) or another programmable logic device, a discrete gate or transistor logic device, a discrete hardware component, or the like. In actual application, the computer system 110 may alternatively include a plurality of processors, and the processor may include one or more processor cores (core).

The memory may include instructions (for example, program logic). The instructions may be executed by the processor to perform various functions of the vehicle 100. The memory may further include additional instructions, including instructions for sending data to one or more of the sensor system 120, the control system 130, and the peripheral device 140, instructions for receiving data from one or more of the sensor system 120, the control system 130, and the peripheral device 140, instructions for interacting with one or more of the sensor system 120, the control system 130, and the peripheral device 140, and instructions for controlling one or more of the sensor system 120, the control system 130, and the peripheral device 140.

In addition to the instructions, the memory may further store data, for example, a road map, route information, a position, a direction, and a speed of the vehicle, other such vehicle data, and other information. Such information may be used by the vehicle 100 and the computer system 110 when the vehicle 100 operates in an autonomous mode, a semi-autonomous mode, and/or a manual mode.

It may be understood that the processor or the memory may actually include a plurality of processors or memories that are not stored in a same physical housing. For example, the memory may be a hard disk drive or another storage medium located in a housing different from the computer system 110. Therefore, a reference to the processor or the memory is understood as a reference to a set of processors or memories that may operate concurrently or may not operate concurrently.

In some examples, different components may have respective processors, and the processor performs only calculation related to a function specific to the component.

Optionally, one or more of the foregoing components may be separately installed from or associated with the vehicle 100. For example, the memory may be partially or completely separated from the vehicle 100. The foregoing components may be communicatively coupled in a wired and/or wireless manner.

Optionally, the foregoing components are merely examples. In actual application, components in the foregoing modules may be added or deleted based on an actual requirement. FIG. 1 should not be understood as a limitation on this embodiment of this application.

In an example, the vehicle information processing method provided in embodiments of this application may be applied to a vehicle information processing apparatus. The vehicle information processing apparatus may be pre-loaded into a memory in the computer system 110 in a form of a computer program product. A processor in the computer system 110 may execute instructions in the memory, to implement the steps in the vehicle information processing method provided in embodiments of this application.

In an example, the vehicle information processing apparatus may alternatively be disposed in a vehicle. In a specific example, the vehicle information processing apparatus may be a vehicle-mounted terminal, an in-vehicle infotainment, an in-vehicle audio and video entertainment apparatus, or the like that is disposed in the vehicle.

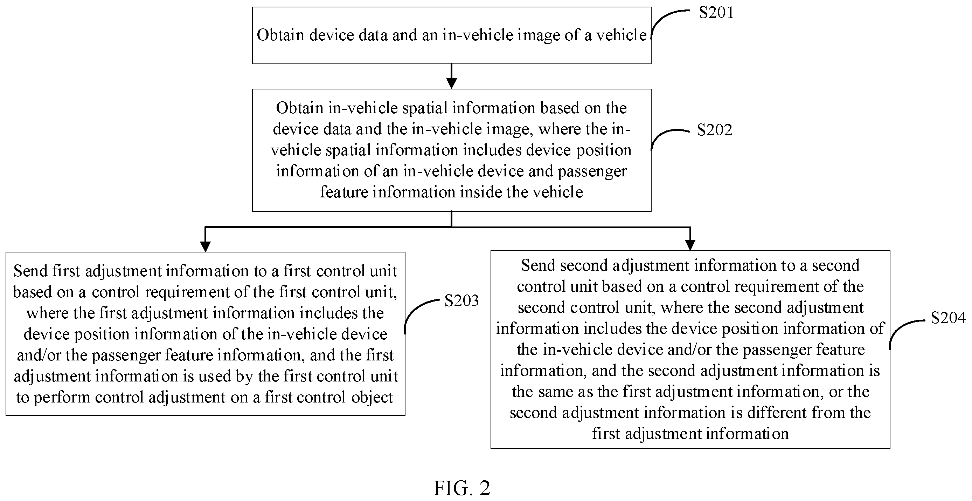

For ease of understanding, the following describes, with reference to the accompanying drawings, in detail the vehicle information processing method provided in embodiments of this application. FIG. 2 is a schematic flowchart 1 of a vehicle information processing method according to an embodiment of this application. The method shown in FIG. 2 is applied to the vehicle shown in FIG. 1, and is performed by a vehicle information processing apparatus. As shown in FIG. 2, the vehicle information processing method provided in this embodiment of this application includes step S201 to step S204.

S201: Obtain device data and an in-vehicle image of a vehicle.

The device data of the vehicle is device data of an adjustable device (briefly referred to as an "in-vehicle device" below) in the vehicle. For example, the in-vehicle device includes but is not limited to one or more devices such as a steering wheel, a seat, a rearview mirror, a HUD device, and a play device (for example, a loudspeaker).

In this embodiment of this application, a driving apparatus (for example, a motor) and a control unit are correspondingly configured for each in-vehicle device, and the control unit may perform control adjustment on the in-vehicle device by controlling the driving apparatus.

It may be understood that the control unit corresponding to each in-vehicle device may be an independent controller, or may be a control module in a controller. This is not specifically limited.

In an example, the driving apparatus corresponding to each in-vehicle device may have a plurality of gears, and the control unit may perform control adjustment on the in-vehicle device by adjusting a gear of the driving apparatus.

In this embodiment of this application, the device data of the vehicle includes current adjustment data and initial adjustment data of each in-vehicle device.

In an example, the current adjustment data of the in-vehicle device may be a gear value of a driving apparatus currently corresponding to the in-vehicle device. The initial adjustment data of the in-vehicle device may be an initial gear value of the driving apparatus corresponding to the in-vehicle device, namely, an unadjusted gear value.

In an example, the vehicle information processing apparatus may obtain the device data of the vehicle through the control unit corresponding to the in-vehicle device. For example, the control unit may collect a current gear value of the driving apparatus corresponding to the in-vehicle device in real time, and send the current gear value and the initial gear value of the driving apparatus corresponding to the in-vehicle device to the vehicle information processing apparatus in real time. For another example, the vehicle information processing apparatus may read, in real time through the control unit, a current gear value and the initial gear value that are of the driving apparatus corresponding to the in-vehicle device and that are collected by the control unit.

In this embodiment of this application, the in-vehicle image of the vehicle is an image of the inside of the vehicle, and a spatial environment change inside the vehicle may be reflected by using the image of the inside of the vehicle.

In an example, the vehicle information processing apparatus obtains the in-vehicle image of the vehicle through a camera or a video camera disposed in the vehicle. For example, the vehicle information processing apparatus may control the camera to take a photo of in-vehicle space, to read the in-vehicle image from the camera. For another example, the vehicle information processing apparatus may perform frame extraction processing on a video captured by the video camera, to obtain the in-vehicle image.

In an example, the obtained in-vehicle image may be a monocular image, or may be a depth image.

In an example, the vehicle information processing apparatus may obtain the device data and the in-vehicle image of the vehicle in real time. To save energy, in some examples, after detecting that a user gets on the vehicle, the vehicle information processing apparatus may obtain the device data and the in-vehicle image of the vehicle in real time, and after detecting that the user gets off the vehicle, stop obtaining the device data and the in-vehicle image of the vehicle.

It may be understood that in some examples, the vehicle information processing apparatus may alternatively obtain the device data and the in-vehicle image of the vehicle based on a preset period, or obtain the device data and the in-vehicle image of the vehicle based on another requirement. This is not specifically limited in this application, and may be set based on an actual requirement.

S202: Obtain in-vehicle spatial information based on the device data and the in-vehicle image, where the in-vehicle spatial information includes device position information of an in-vehicle device and passenger feature information inside the vehicle.

The device position information of the in-vehicle device is current position information of the in-vehicle device.

In this embodiment of this application, after the device data is obtained, for each in-vehicle device, device position information of the in-vehicle device, namely, current position information of the in-vehicle device, may be obtained based on a motion model of the in-vehicle device and current adjustment data and initial adjustment data of the in-vehicle device in the device data.

The motion model may represent a motion pattern of the in-vehicle device when adjustment data changes. For example, the motion model represents a motion pattern of the in-vehicle device when the gear of the corresponding driving apparatus changes, and a movement distance and/or a rotation angle of the in-vehicle device per unit gear may be obtained by using the motion model.

In an example, the motion model of the in-vehicle device is obtained by using a motion mode of the in-vehicle device. For example, the motion mode includes but is not limited to translation, two-dimensional rotation, and three-dimensional motion.

For translation and two-dimensional rotation, the motion model of the in-vehicle device may be established based on a mechanical motion structure of the in-vehicle device. For example, for the motion mode of translation, movement data of the in-vehicle device in each gear may be directly obtained, to obtain a motion pattern of the in-vehicle device in the motion mode of translation when the gear of the corresponding driving apparatus changes. For the motion mode of two-dimensional rotation, rotation angle data of the in-vehicle device in each gear may alternatively be directly obtained, to obtain a motion pattern of the in-vehicle device in the motion mode of two-dimensional rotation when the gear of the corresponding driving apparatus changes.

For three-dimensional motion, the three-dimensional motion of the in-vehicle device may be estimated and fitted based on image calibration, to obtain a motion pattern of the in-vehicle device. For example, for each in-vehicle device, the gear of the driving apparatus corresponding to the in-vehicle device is adjusted, and for each gear, a position image of the in-vehicle device on a calibration board is obtained. Position images of the in-vehicle device on the calibration board in different gears are analyzed, to obtain position information of the in-vehicle device in different gears. The position information of the in-vehicle device in different gears is fitted, to obtain the motion pattern of the in-vehicle device when the gear of the corresponding driving apparatus changes.

An example in which the in-vehicle device is a seat device is used for description. Adjustment of the seat device includes front-to-back distance adjustment, backrest angle adjustment, and height adjustment. During front-to-back distance adjustment, motion of the seat device is translational motion. A movement distance of the seat device in each gear may be directly obtained, and based on the movement distance of the seat device in each gear, a motion pattern of the seat device during front-to-back distance adjustment when a gear of a corresponding driving apparatus changes may be obtained. During height adjustment, motion of the seat device is three-dimensional motion. Therefore, the three-dimensional motion of the seat device may be fitted based on image calibration, to obtain a motion pattern of the seat device during height adjustment when a gear of a corresponding driving apparatus changes.

Motion of a backrest may be considered as rotation about an intersection line between the backrest and a seat cushion. Therefore, during backrest angle adjustment, motion of the seat device is two-dimensional rotational motion. Therefore, a rotation angle of the backrest in each gear may be directly obtained, and based on the rotation angle of the backrest in each gear, a motion pattern of the seat device during backrest angle adjustment when a gear of a corresponding driving apparatus changes may be obtained.

In this embodiment of this application, for each in-vehicle device, the current adjustment data of the in-vehicle device represents the current gear value of the driving apparatus corresponding to the in-vehicle device, and the initial adjustment data of the in-vehicle device represents the initial gear value of the driving apparatus corresponding to the in-vehicle device. Obtaining the device position information of the in-vehicle device based on the motion model of the in-vehicle device and the current adjustment data and the initial adjustment data of the in-vehicle device may be: obtaining gear change information of the driving apparatus corresponding to the in-vehicle device based on the current adjustment data and the initial adjustment data of the in-vehicle device, obtaining position change data of the in-vehicle device based on the gear change information and the motion model of the in-vehicle device, and obtaining the device position information of the in-vehicle device, namely, the current position information of the in-vehicle device, based on initial position information of the in-vehicle device and the position change data of the in-vehicle device.

It may be understood that when the driving apparatus corresponding to the in-vehicle device is in an initial gear, a position of the in-vehicle device is the initial position information of the in-vehicle device. For example, if it is obtained, based on the current adjustment data of the in-vehicle device, that the gear of the driving apparatus corresponding to the in-vehicle device is a gear A, and it is obtained, based on the initial adjustment data of the in-vehicle device, that the initial gear of the driving apparatus corresponding to the in-vehicle device is a gear B, the gear change information is A-B. If it is obtained, based on the motion model, that the in-vehicle device moves X1 in each gear of the driving apparatus, the position change data of the in-vehicle device is (A-B)*X1. If the initial position information of the in-vehicle device is Y1, the current position information of the in-vehicle device is Y1+(A-B)*X1.

In an example, a memory of each vehicle stores a vehicle digital model of the vehicle, and the vehicle information processing apparatus may obtain initial position information of each in-vehicle device from the vehicle digital model. The vehicle digital model is a model that mathematically describes a geometric shape, material attributes, kinematic characteristics, dynamics characteristics, and the like of a vehicle product. Therefore, the vehicle digital model can represent a digital simulation model of the vehicle. Position information of the in-vehicle device in the vehicle digital model may represent initial position information of the in-vehicle device in the vehicle.

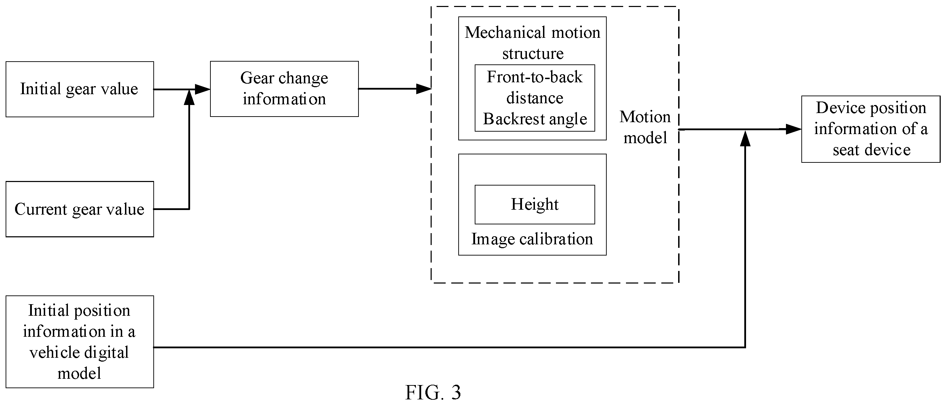

An example in which the in-vehicle device is the seat device is used for description. As shown in FIG. 3, initial position information of the seat device is obtained from the vehicle digital model, and gear change information of a driving apparatus corresponding to the seat device is obtained based on a current gear value and an initial gear value of the seat, including gear change information of the driving apparatus for adjusting a front-to-back distance, gear change information of the driving apparatus for adjusting a backrest angle, and gear change information of the driving apparatus for adjusting a height. The gear change information is input into a motion model of the seat device, including a motion model established based on a mechanical motion structure and image calibration. In this way, position change data of the seat device can be obtained, including a position change of the seat device in terms of front-to-back distance, an angle change of the seat backrest, and a position change in terms of height. The position change data of the seat device is applied to the initial position information of the seat device, that is, the position change data of the seat device is added to the initial position information of the seat device, to obtain device position information of the seat device, namely, current position information of the seat device.

It may be understood that the device position information of the in-vehicle device is current position information of the in-vehicle device in a vehicle coordinate system.

In this embodiment of this application, object detection may be performed on the obtained in-vehicle image to obtain the passenger feature information. The passenger feature information includes passenger part position information, for example, passenger eye position information, passenger ear position information, passenger arm joint point position information, passenger shoulder position information, and the like.

To further facilitate control adjustment on a control object by the control unit, implement personalized adjustment for each user, and improve vehicle use experience of the user, in this embodiment of this application, the passenger feature information may further include passenger distribution information and passenger size information.

In an example, performing object detection on the in-vehicle image to obtain the passenger feature information includes:
(A) performing object detection on the in-vehicle image to obtain the passenger part position information and the passenger distribution information;
(B) obtaining passenger height information based on the passenger part position information and the position information of the in-vehicle device, namely, the seat; and
(C) obtaining the passenger size information based on the passenger height information.

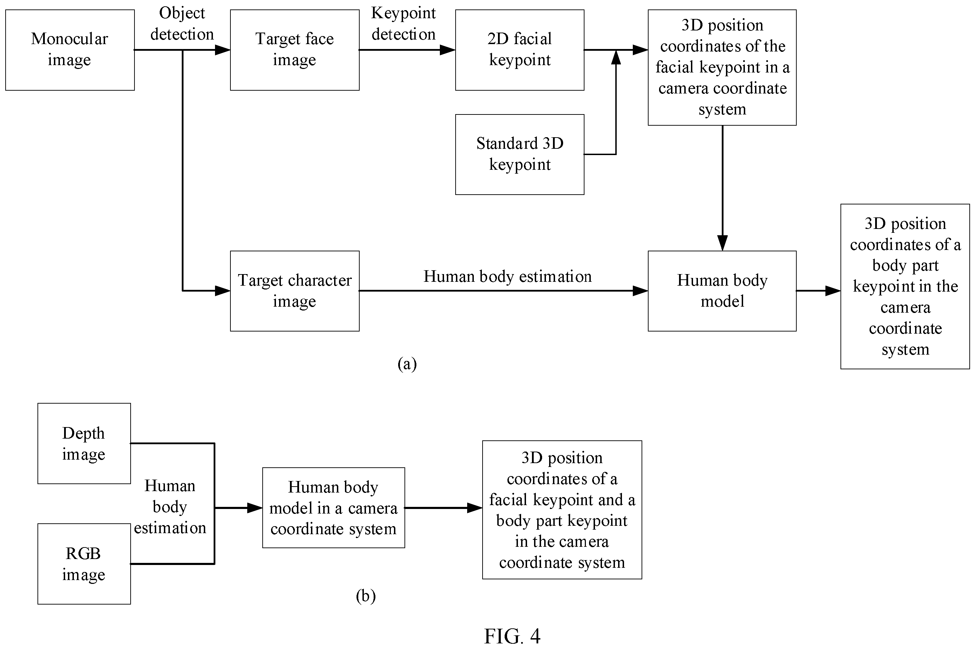

The following uses a monocular image as an example to describe a process of obtaining the passenger part position information. With reference to (a) in FIG. 4, for the monocular image, object detection may be first performed on the monocular image to obtain a target face image and a target character image. Then, keypoint detection is performed on the target face image to obtain a facial keypoint, for example, an eye, an ear, a mouth, and the like.

It may be understood that position information of the facial keypoint obtained based on the target face image is 2D coordinates (briefly referred to as a "2D facial keypoint") of the facial keypoint in a camera coordinate system. To improve accuracy, after the facial keypoint is detected, the facial keypoint may be mapped to a standard 3D keypoint in a preset head template, to obtain 3D position coordinates of the facial keypoint in the camera coordinate system.

After the 3D position coordinates of the facial keypoint in the camera coordinate system are obtained, human body estimation may be performed on the target character image to obtain a human body model. The human body model includes a body part keypoint and a facial keypoint. Therefore, after the human body model is obtained, the 3D position coordinates of the facial keypoint in the camera coordinate system may be mapped to the facial keypoint in the human body model, so that the human body model is converted into the camera coordinate system, to obtain 3D position coordinates of the body part keypoint in the human body model in the camera coordinate system. The body part keypoint includes a shoulder, an arm joint, and the like.

In an example, object detection may be performed on the in-vehicle image by using an object detection algorithm, for example, a region-based convolutional neural network (region-CNN, RCNN), SPP-Net (Spatial Pyramid Pooling), YOLO (You Only Look Once), or the like, to obtain the target face image and the target character image. This is not specifically limited, and may be set based on an actual requirement.

In an example, keypoint detection may be performed on the target face image by using a facial keypoint detection algorithm, for example, ASM (active shape model), AAM (active appearance model), deep learning, or another algorithm, to obtain the facial keypoint. This is not specifically limited, and may be set based on an actual requirement.

In an example, human body estimation may be performed on the target character image by using a human body keypoint detection algorithm, for example, OpenPose, Mask R-CNN, or another algorithm, to obtain the human body model. This is not specifically limited, and may be set based on an actual requirement.

With reference to (b) in FIG. 4, an example in which the in-vehicle image is a depth image is used to describe a process of obtaining the passenger part position information. For the depth image, human body estimation is performed by using the depth image and a corresponding RGB image, a human body model in a camera coordinate system is fitted, and then 3D position coordinates of a facial keypoint and a body part keypoint are directly obtained from the human body model. In some examples, point cloud data may alternatively be obtained based on the depth image and the corresponding RGB image, and position information of the facial keypoint and the body part may be obtained from the point cloud data. For details, refer to a conventional technology. Details are not described herein. In some examples, the RGB image may alternatively be an IR image. This is not specifically limited, and may be set based on an actual requirement. The IR image is an infrared image output by an infrared image sensor. The RGB image is a digital image format, that is, represents color space (red, green, and blue) used by the image format, and further represents pixel values of red, green, and blue channels included in the image.

In this embodiment of this application, the passenger part position information includes position information of a facial keypoint, namely, 3D position coordinates of the facial keypoint in the camera coordinate system, for example, an eye *P_{eye}*(*x*, *y*, *z*), an ear *Pₑₐᵣ*(*x, y*, *z*), a mouth *Pₘₒᵤₜₕ*(*x, y*, *z*), and the like, and position information of a body part keypoint, namely, 3D position coordinates of the body part keypoint in the camera coordinate system, for example, a shoulder *P_{J}*(*x*, *y*, *z*), an arm joint point *P_{SG}*(*x*, *y*, *z*), and the like.

In an example, performing object detection on the in-vehicle image to obtain the passenger distribution information may be: performing object detection on the in-vehicle image to obtain passengers at different positions inside the vehicle, and performing position numbering on the passengers at the different positions to obtain the passenger distribution information in the vehicle.

It may be understood that the foregoing is merely an example description of a manner of obtaining the passenger distribution information in this embodiment of this application, and is not intended to specifically limit the manner of obtaining the passenger distribution information. In some examples, the passenger distribution information may be obtained in another manner. For example, human body detection may be performed inside the vehicle by using a millimeter-wave radar, to obtain the passenger distribution information in the vehicle.

In this embodiment of this application, after the passenger part position information and the device position information of the in-vehicle device are obtained, the passenger height information may be obtained based on the passenger part position information and the device position information of the in-vehicle device, and the passenger size information may be obtained based on the passenger height information.

For example, the passenger height information may be obtained based on the passenger eye position in the passenger part position information and the device position information of the seat device in the in-vehicle device, and then the passenger size information may be obtained based on the passenger height information.

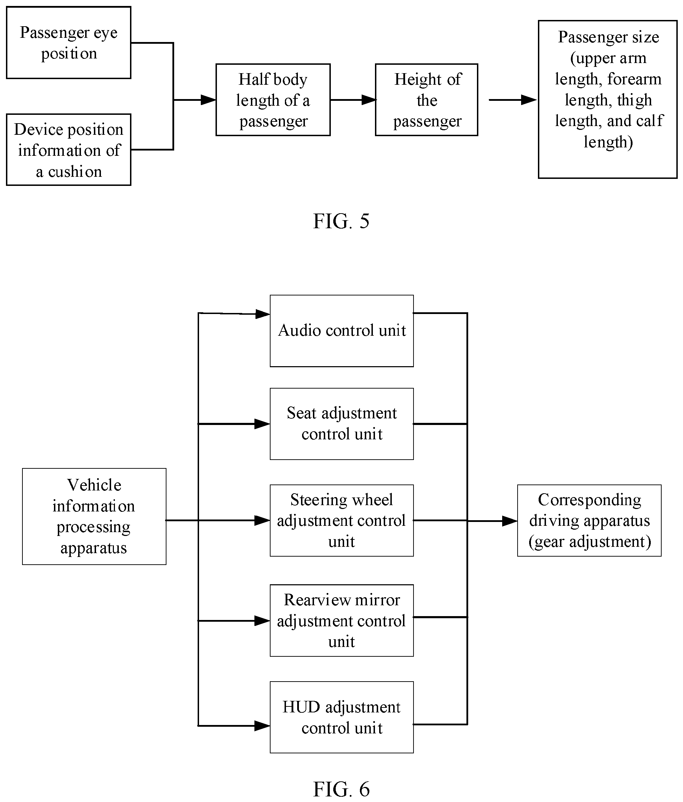

As shown in FIG. 5, obtaining the passenger height information based on the passenger eye position and the device position information of the seat device may be: first obtaining a half body length of a passenger based on the passenger eye position information and device position information of a cushion in the seat device, and then obtaining a height of the passenger based on the half body length of the passenger.

Before the half body length of the passenger is determined, the passenger part position information and the device position information of the in-vehicle device may be converted into a same coordinate system. In the same coordinate system, the half body length of the passenger is obtained based on the passenger eye position information and the device position information of the cushion in the seat device.

The device position information of the seat device includes the device position information of the cushion. A position of the cushion may be considered as a position of a contact point between a human body and the cushion, namely, a position of a hip of the human body. Therefore, the half body length of the passenger may be estimated based on the passenger eye position and the device position information of the cushion.

In an example, obtaining the height of the passenger based on the half body length of the passenger may be estimating the height of the passenger based on the half body length of the passenger and a standard human body ratio. The standard human body ratio indicates a ratio relationship between a half body length and a height. Therefore, the height of the passenger can be estimated based on the ratio relationship and the half body length of the passenger.

In an example, human body data may be collected through data collection, a relationship between a half body length and a height is obtained through fitting based on the human body data, and then the height of the passenger may be estimated based on the relationship between the half body length and the height and the half body length of the passenger.

After the height of the passenger is obtained, the passenger size information of the passenger may be obtained based on the standard human body ratio.

In an example, the passenger size information of the passenger includes an upper arm length, a forearm length, a thigh length, a calf length, and the like of the passenger.

In this embodiment of this application, after the device position information of the in-vehicle device and the passenger feature information are obtained, it can be detected, based on the device position information of the in-vehicle device and the passenger feature information, whether a position of the device changes, whether the passenger moves, and the like, to sense changes in an in-vehicle person and the in-vehicle device in a timely manner, and sense a change in an in-vehicle spatial environment in a timely manner.

In an example, to facilitate control adjustment on the corresponding control object by the control unit, after the passenger part position information and the device position information are obtained, a relative position between the passenger body and the in-vehicle device may be determined based on the passenger part position information and the device position information, and a change in an in-vehicle spatial environment may be sensed in a timely manner based on the relative position between the passenger body and the in-vehicle device. Based on this, the in-vehicle spatial information may further include the relative position between the human body and the in-vehicle device.

S203: Send first adjustment information to a first control unit based on a control requirement of the first control unit, where the first adjustment information includes the device position information of the in-vehicle device and/or the passenger feature information, and the first adjustment information is used by the first control unit to perform control adjustment on a first control object.

S204: Send second adjustment information to a second control unit based on a control requirement of the second control unit, where the second adjustment information includes the device position information of the in-vehicle device and/or the passenger feature information, and the second adjustment information is the same as the first adjustment information, or the second adjustment information is different from the first adjustment information.

To improve control effect on the control object and implement real-time control adjustment on the control object, in this embodiment of this application, after the position information of the in-vehicle device and the passenger feature information are obtained, the first adjustment information may be sent to the first control unit based on the control requirement of the first control unit, so that the first control unit can perform control adjustment on the first control object based on the first adjustment information, and the second adjustment information may be sent to the second control unit based on the control requirement of the second control unit, so that the second control unit can perform control adjustment on a second control object based on the second adjustment information.

The first control unit is one or more of control units corresponding to a plurality of in-vehicle devices, and the second control unit is one or more of the control units corresponding to the plurality of in-vehicle devices other than the first control unit. The first adjustment information of the first control unit may be the same as or different from the second adjustment information of the second control unit.

It may be understood that the first control unit and the second control unit are merely example descriptions in this embodiment of this application, and are not intended to limit the control unit. In some examples, there may further be a third control unit, a fourth control unit, and the like. This is specifically set based on an actual requirement.

In this embodiment of this application, after obtaining the in-vehicle spatial information, the vehicle information processing apparatus may send corresponding adjustment information to each control unit based on a control requirement of each control unit, so that each control unit can perform control adjustment on a controlled control object based on the adjustment information.

In an example, the vehicle information processing apparatus may synchronously send corresponding adjustment information to all control units based on control requirements of all the control units, or may separately send corresponding adjustment information to a control unit based on a control requirement of the control unit. This is not specifically limited, and may be set based on an actual requirement.

In this embodiment of this application, a control object of each control unit is an in-vehicle device controlled by the control unit. For example, a control object corresponding to an audio control unit is a play device (for example, a loudspeaker), and a control object corresponding to a seat control unit is a seat.

In this embodiment of this application, a control requirement of each control unit indicates adjustment information required when the control unit performs control adjustment on the controlled object. It may be understood that the adjustment information required by the control unit is one or more pieces of information in the in-vehicle spatial information, that is, the adjustment information includes the device position information of the in-vehicle device and/or the passenger feature information.

For example, the adjustment information required by the control unit may be obtained based on the control requirement of the control unit, and then the adjustment information may be sent to the control unit. For example, an example in which the control unit is an audio control unit is used for description. A control object corresponding to the audio control unit is a play device. When control adjustment is performed on the play device, ear position information and position information of the play device are required. Therefore, based on a control requirement of the audio control unit, it may be obtained that adjustment information of the audio control unit includes the ear position information in the passenger feature information and the device position information of the play device in the device position information of the in-vehicle device. Then, the ear position information and the device position information of the play device are sent to the audio control unit.

In an example, the vehicle information processing apparatus provides a subscription interface for each control unit, and each control unit may send the control requirement of the control unit to the vehicle information processing apparatus through the subscription interface. Therefore, the vehicle information processing method provided in this embodiment of this application may further include the following steps:
receiving a subscription request of the control unit through the subscription interface; and obtaining the control requirement of the control unit based on the subscription request.

Each control unit may send the subscription request to the vehicle information processing apparatus through the subscription interface. The subscription request includes adjustment information that the control unit needs to subscribe to. Therefore, after receiving, through the subscription interface, the subscription request sent by the control unit, the vehicle information processing apparatus may obtain, from the subscription request, the adjustment information required by the control unit, to obtain the control requirement of the control unit.

It may be understood that after obtaining the control requirement of the control unit through the subscription interface, the vehicle information processing apparatus can send the required adjustment information to the control unit based on the control requirement of the control unit.

In an example, the vehicle information processing apparatus may send the required adjustment information to the control unit through a reporting interface. The reporting interface may be an interface different from the subscription interface, or the reporting interface may be an interface the same as the subscription interface.

In an example, after the vehicle information processing apparatus obtains the device position information of the in-vehicle device and the passenger feature information, if it is obtained, based on the device position information of the in-vehicle device and the passenger feature information, that the adjustment information required by the control unit changes, latest adjustment information is sent to the control unit, so that the control unit senses a change in the spatial environment in a timely manner, and performs control adjustment on the control object based on the latest adjustment information.

For example, the audio control unit is used as an example for description. The adjustment information required by the audio control unit includes the ear position information and the position information of the play device. After the vehicle information processing apparatus obtains the device position information of the in-vehicle device and the passenger feature information, if it is obtained, based on the device position information of the in-vehicle device and the passenger feature information, that the position information of the play device and the ear position information have changed compared with previously obtained information, the vehicle information processing apparatus may send latest obtained position information of the play device and ear position information to the audio control unit.

In an example, to enable the control unit to sense a change in the in-vehicle spatial environment in a timely manner and perform control adjustment on the control object in a timely manner based on the change in the spatial environment, and improve control effect, the vehicle information processing apparatus may send the required adjustment information to the control unit in real time based on the control requirement of the control unit.

In an example, the vehicle information processing apparatus may further provide an information receiving switch for the control unit, and the control unit may determine, through the switch, whether to receive the adjustment information. For example, when the control unit turns off the information receiving switch, the vehicle information processing apparatus does not need to send the required adjustment information to the control unit; or when the control unit turns on the information receiving switch, the vehicle information processing apparatus needs to send the required adjustment information to the control unit.

In an example, the control unit may alternatively send a call request to the vehicle information processing apparatus, and indicate the control requirement of the control unit to the vehicle information processing apparatus based on the call request. For example, the control unit may send the call request to the vehicle information processing apparatus. The call request includes the control requirement of the control unit, namely, adjustment information required by the control unit. After receiving the call request of the control unit, the vehicle information processing apparatus can obtain the control requirement of the control unit based on the call request of the control unit, and send the required adjustment information to the control unit based on the control requirement of the control unit.

In an example, the control unit may regularly send the call request to the vehicle information processing apparatus. After receiving the call request, the vehicle information processing apparatus sends the adjustment information to the control unit based on a control requirement in the call request.

In an example, to enable the control unit to sense a change in the in-vehicle spatial environment in a timely manner and perform control adjustment on the control object in a timely manner based on the change in the spatial environment, and improve control effect, after receiving the call request of the control unit, the vehicle information processing apparatus may send the adjustment information to the control unit in real time based on the control requirement in the call request.

It may be understood that after receiving the adjustment information, the control unit may perform control adjustment on the control object based on the adjustment information. For example, when receiving the adjustment information, the control unit may adjust a gear of a corresponding driving apparatus based on the adjustment information, to perform control adjustment on the control object.

As shown in FIG. 6, the vehicle information processing apparatus separately sends corresponding adjustment information to the audio control unit, a seat adjustment control unit, a steering wheel adjustment control unit, a rearview mirror adjustment control unit, and a HUD adjustment control unit, and the audio control unit, the seat adjustment control unit, the steering wheel adjustment control unit, the rearview mirror adjustment control unit, and the HUD adjustment control unit adjust gears of corresponding driving apparatuses based on the adjustment information, to adjust the loudspeaker, the seat, the steering wheel, the rearview mirror, the HUD, and another in-vehicle device.

To improve control effect of each control unit on the control object, in this embodiment of this application, each control unit may perform control adjustment on the control object based on the passenger feature information and/or the device position information, and information about the in-vehicle person and/or the in-vehicle device.

The following uses the audio control unit as an example for description. For the audio control unit, a change in an in-vehicle spatial position, for example, a seat position, passenger distribution, or the like, may cause a change in a sound field in the vehicle, and even a change in a relative position between the ear and the play device (for example, the loudspeaker) may affect audio receiving by the passenger. Therefore, to improve audio control effect, control adjustment needs to be performed on an audio parameter of the play device based on the seat position information, the position information of the play device, the passenger distribution information, and the passenger ear position information.

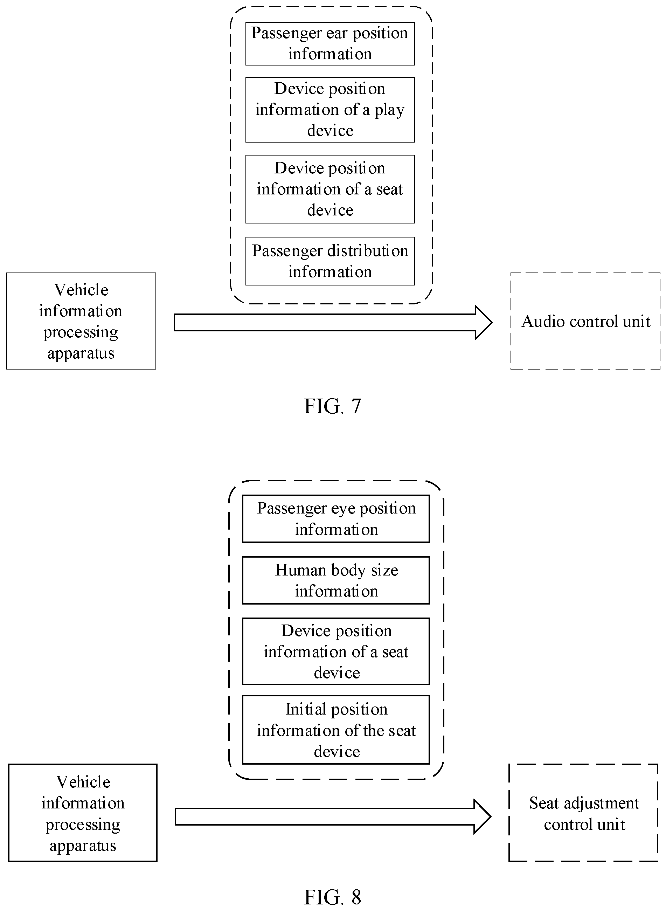

In this embodiment of this application, as shown in FIG. 7, for the audio control unit, the adjustment information includes the passenger distribution information and the passenger ear position information in the passenger feature information, and the device position information of the play device and the device position information of the seat device in the device position information of the in-vehicle device. Therefore, when obtaining the passenger distribution information, the passenger ear position information, the device position information of the play device, and the device position information of the seat device based on the device data and the in-vehicle image, the vehicle information processing apparatus may send the passenger ear position information, the passenger distribution information, the device position information of the play device, and the device position information of the seat device to the audio control unit.

For the play device, gear change information of a driving apparatus corresponding to the play device may be obtained based on current adjustment data and initial adjustment data of the play device, position change data of the play device may be obtained based on the gear change information and a motion model of the play device, and the device position information of the play device may be obtained based on initial position information of the play device and the position change data of the play device.

Correspondingly, for the seat device, gear change information of a driving apparatus corresponding to the seat device may be obtained based on current adjustment data and initial adjustment data of the seat device, position change data of the seat device may be obtained based on the gear change information and a motion model of the seat device, and the device position information of the seat device may be obtained based on initial position information of the seat device and the position change data of the seat device.

The passenger distribution information and the passenger ear position information may be obtained by performing object detection on the in-vehicle image. For a specific process, refer to step S202. Details are not described herein.

It may be understood that after obtaining the device position information of the play device, the device position information of the seat device, the passenger ear position information, and the passenger distribution information, the audio control unit may perform, based on the device position information of the play device, the device position information of the seat device, the passenger ear position information, and the passenger distribution information, control adjustment on an audio parameter of the play device and/or audio played by the play device, to control audio effect played by the play device.

In an example, an audio control strategy is set in the audio control unit. The audio control strategy is a strategy of performing, based on the device position information of the play device, the device position information of the seat device, the passenger ear position information, and the passenger distribution information, control adjustment on the audio parameter of the play device and/or the audio played by the play device.

For example, it is set that the passenger ear position information is *Pₑₐᵣ*(*x, y*, *z*), the device position information of the play device is *P_{loudspeaker}*(*x, y*, *z*), the device position information of the seat device is *Pₛₑₐₜ*(*x*, *y*, *z*), and the passenger distribution information is A[1, 0, 0, 0, 0, 0]. Herein, the passenger distribution information A[1, 0, 0, 0, 0, 0] indicates codes of different positions in the vehicle, 1 indicates that there is a passenger at a corresponding position, and 0 indicates that there is no passenger at a corresponding position. After *Pₑₐᵣ*(*x, y*, *z*), *P_{loudspeaker}*(*x, y*, *z*), *Pₛₑₐₜ*(*x*, *y*, *z*), and A[1, 0, 0, 0, 0, 0] are sent to the audio control unit, the audio control unit may perform, based on the audio control strategy, *Pₑₐᵣ*(*x, y*, *z*) , *P_{loudspeaker}*(*x, y*, *z*), *Pₛₑₐₜ*(*x*, *y*, *z*), A[1, 0, 0, 0, 0, 0], and other information, control adjustment on the audio parameter of the play device and/or the audio played by the play device.

In an example, after receiving the device position information of the play device, the device position information of the seat device, the passenger ear position information, and the passenger distribution information, the audio control unit may adjust a position of the play device based on the device position information of the play device and the passenger ear position information, so that the device position of the play device matches the passenger ear position, and perform, based on the passenger distribution information and the device position information of the seat device, control adjustment on the audio parameter of the audio played by the play device, so that the audio played by the play device adapts to the sound field in the vehicle.

In this embodiment of this application, the device data and the in-vehicle image in the vehicle are collected in real time, the device position information of the play device, the device position information of the seat device, the passenger ear position information, and the passenger distribution information are sensed in real time based on the device data and the in-vehicle image, and the device position information of the play device, the device position information of the seat device, the passenger ear position information, and the passenger distribution information are used in the audio control unit, so that the audio control unit can adapt to a change in an in-vehicle spatial environment based on the device position information of the play device, the device position information of the seat device, the passenger ear position information, and the passenger distribution information. This implements real-time control adjustment on audio play, implements more intelligent audio adjustment, and improves audio adjustment effect, so that the passenger has better audio experience.

For the seat adjustment control unit, the seat device may be adjusted by using the device position information of the seat device. Considering that a human body size and a seat position affect use of the seat by the passenger, to improve seat adjustment effect, and implement personalized adaptive adjustment for each user, in this embodiment of this application, for the seat adjustment control unit, the adjustment information includes the passenger size information and the passenger eye position information in the passenger feature information, and the device position information of the seat device in the device position information of the in-vehicle device. Therefore, when obtaining the passenger size information, the passenger eye position information, and the device position information of the seat device based on the device data and the in-vehicle image, the vehicle information processing apparatus may send the passenger size information, the passenger eye position information, and the device position information of the seat device to the seat adjustment control unit.

For a process in which the vehicle information processing apparatus obtains the passenger size information, the passenger eye position information, and the device position information of the seat device based on the device data and the in-vehicle image, refer to step S202. Details are not described herein.

As shown in FIG. 8, after the passenger size information, the passenger eye position information, and the device position information of the seat device are obtained, the passenger size information, the passenger eye position information, and the device position information of the seat device may be sent to the seat adjustment control unit, and then the seat adjustment control unit may perform control adjustment on the seat device based on the passenger size information, the passenger eye position information, and the device position information of the seat device, to implement personalized intelligent seat adjustment for each user, improve seat adjustment effect, and improve vehicle use experience of the user.

In an example, a seat adjustment strategy is set in the seat adjustment control unit. The seat adjustment strategy is a strategy of performing control adjustment on the seat device based on the passenger size information, the passenger eye position information, and the device position information of the seat device.

In an example, after receiving the passenger size information, the passenger eye position information, and the device position information of the seat device, the seat adjustment control unit may obtain height adjustment information of the seat device based on the passenger eye position information and preset target eye position information, and obtain a target height position of the seat device based on the height adjustment information of the seat device and the device position information of the seat device. A target horizontal position of the seat device is obtained based on the thigh length and the calf length in the passenger size information, and ergonomic data. A target position *P_{H}*(*x*, *y*, *z*) of the seat device can be obtained based on the target horizontal position and the target height position of the seat device (the point *P_{H}* is an intersection point at which upper and lower bodies of the human body fold, and is approximated as the target position of the seat device, (x, y) represents the target horizontal position of the seat device, and z represents the target height position of the seat device).

After obtaining the target position of the seat device, the seat adjustment control unit may obtain a gear value (*f*, *h*) corresponding to the target position of the seat device with reference to an initial position of the seat device in the vehicle digital model and a motion model of the seat device. Herein, f represents a frontward-backward gear value of the seat device, and h represents an up-down gear value of the seat device.

It may be understood that the frontward-backward gear value is used to adjust a front-to-back distance of the seat device, to adjust a position of the seat device in a horizontal direction, and the up-down gear value is used to adjust a height of the seat device, to adjust the position of the seat device in a height direction.

After obtaining the gear value corresponding to the target position of the seat device, the seat adjustment control unit may deliver an adjustment instruction to the driving apparatus of the seat device based on the gear value, to control the driving apparatus of the seat device to adjust the seat device based on the gear value, thereby implementing personalized intelligent adjustment of the seat device.

In an example, the initial position information of the seat device in the vehicle digital model may be sent by the vehicle information processing apparatus to the seat adjustment control unit.

It may be understood that in some examples, the initial position information of the seat device in the vehicle digital model may be read by the seat adjustment control unit from the vehicle digital model stored in the vehicle.

To further improve seat adjustment effect, and implement personalized adaptive adjustment for each user, in an example, for the seat adjustment control unit, the passenger feature information may not only include the passenger size information and the passenger eye position information, but also include passenger weight information.

In an example, a weight sensor is disposed in each seat, and the vehicle information processing apparatus may obtain the passenger weight information through the weight sensor.

In an example, the passenger weight information may alternatively be obtained based on the in-vehicle image. For example, a passenger body volume may be obtained based on a detection result of the in-vehicle image, and the passenger weight information may be obtained based on the passenger body volume. For example, when the in-vehicle image is a monocular image, the in-vehicle image may be detected to obtain a three-dimensional human body shape including human body part position information, and the human body volume is estimated based on the three-dimensional human body shape. For another example, when the in-vehicle image is a depth image, human body estimation may be directly performed on the depth image to obtain the passenger body volume information.

After the passenger body volume is obtained, the passenger weight information may be obtained based on a relationship between a human body volume and a weight.

In an example, after the passenger size information, the passenger eye position information, the device position information of the seat device, and the passenger weight information are obtained, the passenger size information, the passenger eye position information, the device position information of the seat device, and the passenger weight information may be sent to the seat adjustment control unit, so that the seat adjustment control unit performs control adjustment on the seat device.

For example, an initial target position of the seat device may be obtained based on the passenger size information, the passenger eye position information, and the device position information of the seat device, and then it may be detected, based on the passenger weight information, whether a weight of the passenger exceeds a specified weight threshold. If the weight of the passenger exceeds the specified weight threshold, the initial target position is adjusted to obtain a final target position of the seat device, so as to reserve sufficient seating space for the passenger. If the weight of the passenger does not exceed the specified weight threshold, the initial target position is determined as a final target position of the seat device.

In this embodiment of this application, the device data and the in-vehicle image in the vehicle are collected in real time, the device position information of the seat device, the passenger eye position information, and the passenger size information are sensed in real time based on the device data and the in-vehicle image in the vehicle, and the device position information of the seat device, the passenger eye position information, and the passenger size information are used in the seat adjustment control unit, so that the seat adjustment control unit can implement personalized intelligent seat adjustment for each user based on the device position information of the seat device, the passenger eye position information, and the passenger size information.

For the steering wheel adjustment control unit, a human body size and an eye height affect use of the steering wheel by the passenger. Therefore, to improve steering wheel adjustment effect, and implement personalized adaptive adjustment for each user, in this embodiment of this application, for the steering wheel adjustment control unit, the adjustment information includes the passenger size information and the passenger eye position information in the passenger feature information.

For obtaining of the passenger size information and the passenger eye position information, refer to step S202. Details are not described herein.

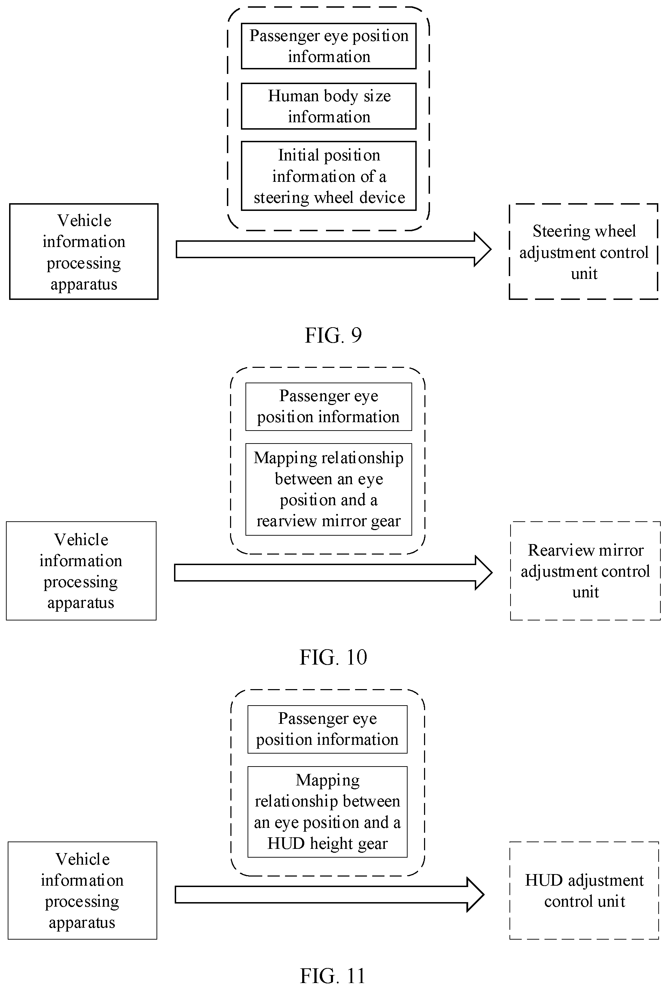

As shown in FIG. 9, after the passenger size information and the passenger eye position information are obtained, the passenger size information and the passenger eye position information may be sent to the steering wheel adjustment control unit, and then the steering wheel adjustment control unit may perform control adjustment on the steering wheel device based on the passenger size information and the passenger eye position information, to implement personalized steering wheel intelligent adjustment for each user, improve steering wheel adjustment effect, and improve vehicle use experience of the user.

In an example, a steering wheel adjustment strategy is set in the steering wheel adjustment control unit. The steering wheel adjustment strategy is a strategy of performing control adjustment on the steering wheel device based on the passenger size information and the passenger eye position information.

In an example, after receiving the passenger size information and the passenger eye position information, the steering wheel adjustment control unit may estimate a target height position of the steering wheel device based on the passenger eye position information. A target horizontal position of the steering wheel device is obtained based on the upper arm length and the forearm length in the passenger size information, and ergonomic data. A target position *P_{W}*(*x*, *y*, *z*) of the steering wheel device can be obtained based on the target horizontal position and the target height position of the steering wheel device (the point *P_{W}* is position coordinates of a holding point at which the steering wheel is held by the passenger, (x, y) represents the target horizontal position of the steering wheel device, and z represents the target height position of the steering wheel device).

After obtaining the target position of the steering wheel device, the steering wheel adjustment control unit may obtain a gear value (*k*, *l*) corresponding to the target position of the steering wheel device with reference to an initial position of the steering wheel device in the vehicle digital model and a motion model of the steering wheel device. Herein, k represents a frontward-backward gear value of the steering wheel device, and l represents an up-down gear value of the steering wheel device.

It may be understood that the frontward-backward gear value is used to adjust a front-to-back distance of the in-vehicle device, namely, the steering wheel, to adjust a position of the in-vehicle device, namely, the steering wheel, in a horizontal direction, and the up-down gear value is used to adjust a height of the steering wheel device, to adjust the position of the steering wheel device in a height direction.

After obtaining the gear value corresponding to the target position of the steering wheel device, the steering wheel adjustment control unit may deliver an adjustment instruction to a driving apparatus of the steering wheel device based on the gear value, to control the driving apparatus of the steering wheel device to adjust the steering wheel device based on the gear value, thereby implementing personalized intelligent adjustment of the steering wheel device.

In an example, the initial position information of the steering wheel device in the vehicle digital model may be sent by the vehicle information processing apparatus to the steering wheel adjustment control unit.

It may be understood that in some examples, the initial position information of the steering wheel device in the vehicle digital model may be read by the steering wheel adjustment control unit from the vehicle digital model stored in the vehicle.

In this embodiment of this application, the device data and the in-vehicle image in the vehicle are collected in real time, the passenger eye position information and the passenger size information are sensed based on the device data and the in-vehicle image in the vehicle, and the passenger eye position information and the passenger size information are used in the steering wheel adjustment control unit, so that the steering wheel adjustment control unit can implement personalized intelligent steering wheel adjustment for each user based on the passenger eye position information and the passenger size information.

For the rearview mirror adjustment control unit and the HUD adjustment control unit, an eye position affects use of the rearview mirror device and the HUD device by the passenger. Therefore, to improve rearview mirror and HUD device adjustment effect, and implement personalized adaptive adjustment for each user, in this embodiment of this application, for the rearview mirror adjustment control unit and the HUD adjustment control unit, the adjustment information includes the passenger eye position information in the passenger feature information.

For a process of obtaining the passenger eye position information, refer to step S202. Details are not described herein.

It may be understood that after the passenger eye position information is obtained, the passenger eye position information may be sent to the rearview mirror adjustment control unit and the HUD adjustment control unit, so that the rearview mirror adjustment control unit performs control adjustment on the rearview mirror device based on the passenger eye position information, and the HUD adjustment control unit performs control adjustment on the HUD device based on the passenger eye position.

In an example, as shown in FIG. 10, a mapping relationship between an eye position and a rearview mirror gear is preset in the vehicle information processing apparatus, and the vehicle information processing apparatus sends the passenger eye position information and the mapping relationship between the eye position and the rearview mirror gear to the rearview mirror adjustment control unit.

After receiving the passenger eye position information and the mapping relationship between the eye position and the rearview mirror gear, the rearview mirror adjustment control unit may obtain a target gear value of the rearview mirror device based on the passenger eye position information and the mapping relationship between the eye position and the rearview mirror gear. After obtaining the target gear value of the rearview mirror device, the rearview mirror adjustment control unit may deliver an adjustment instruction to a driving apparatus of the rearview mirror device based on the target gear value, to control the driving apparatus of the rearview mirror device to adjust the rearview mirror device based on the target gear value, thereby implementing personalized intelligent adjustment of the rearview mirror device.

In an example, the mapping relationship between the eye position and the rearview mirror gear may alternatively be stored in a memory of the vehicle, and the rearview mirror adjustment control unit may read the mapping relationship between the eye position and the rearview mirror gear from the vehicle.

In an example, the mapping relationship between the eye position and the rearview mirror gear may be obtained by fitting a large amount of eye position information and rearview mirror gear data.

In this embodiment of this application, the sensed passenger eye position information and the mapping relationship between the eye position and the rearview mirror gear are used in the rearview mirror adjustment control unit, to implement personalized intelligent rearview mirror adjustment for each user.

In an example, as shown in FIG. 11, a mapping relationship between an eye position and a HUD height gear is further preset in the vehicle information processing apparatus, and the vehicle information processing apparatus sends the passenger eye position information and the mapping relationship between the eye position and the HUD height gear to the HUD adjustment control unit.

After receiving the passenger eye position information and the mapping relationship between the eye position and the HUD height gear, the HUD adjustment control unit may obtain a target height gear value h of the HUD device based on the passenger eye position information and the mapping relationship between the eye position and the HUD height gear. After obtaining the target height gear value h of the HUD device, the HUD adjustment control unit may deliver an adjustment instruction to a driving apparatus of the HUD device based on the target height gear value h, to control the driving apparatus of the HUD device to perform height adjustment on the HUD device based on the target height gear value, thereby implementing personalized intelligent adjustment of the HUD device.

In an example, the mapping relationship between the eye position and the HUD height gear may alternatively be stored in a memory of the vehicle, and the HUD adjustment control unit may read the mapping relationship between the eye position and the HUD height gear from the vehicle.

In an example, the mapping relationship between the eye position and the HUD height gear may be obtained by fitting a large amount of eye position information and HUD height gear data.

In this embodiment of this application, the sensed passenger eye position information and the mapping relationship between the eye position and the HUD height gear are used in the HUD adjustment control unit, to implement personalized intelligent HUD adjustment for each user.

According to the vehicle information processing method provided in this embodiment of this application, spatial information in a vehicle may be obtained based on detection data detected by a detection apparatus in the vehicle, and one or more pieces of information in the in-vehicle spatial information may be sent to a control unit based on a control requirement of the control unit, so that the control unit can sense a change in an in-vehicle spatial environment in a timely manner, and perform control adjustment on a control object based on the change in the in-vehicle environment, to improve control effect on the control object.

In addition, in this embodiment of this application, the in-vehicle spatial information is sensed, and corresponding adjustment information is sent to the control unit based on the in-vehicle spatial information. This avoids a case in which different control units repeatedly collect required adjustment information when performing control adjustment on control objects, thereby avoiding a waste of computing power, saving resources, and improving efficiency. For example, control adjustment on the steering wheel device, control adjustment on the rearview mirror device, and control adjustment on the HUD device share the eye position information, and may be simultaneously performed. Therefore, repeated collection of the eye position information can be avoided, computing power can be saved, and processing efficiency can be improved.

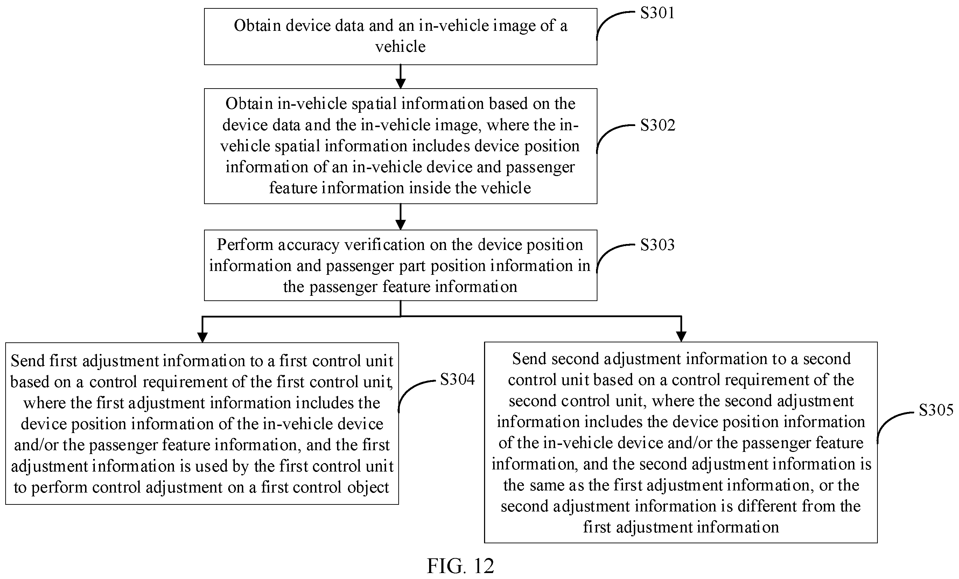

To improve information accuracy and improve control effect of the control unit on the in-vehicle device, in this embodiment of this application, after the in-vehicle spatial information is obtained, accuracy verification may be further performed on the in-vehicle spatial information, to improve accuracy of the in-vehicle spatial information. Based on this, FIG. 12 is a schematic flowchart 2 of a vehicle information processing method according to an embodiment of this application. The method shown in FIG. 12 is applied to the vehicle shown in FIG. 1, and is performed by a vehicle information processing apparatus. As shown in FIG. 12, in this embodiment of this application, the vehicle information processing method may further include step S301 to step S305.

S301: Obtain device data and an in-vehicle image of a vehicle.

S302: Obtain in-vehicle spatial information based on the device data and the in-vehicle image, where the in-vehicle spatial information includes device position information of an in-vehicle device and passenger feature information inside the vehicle.

For a process in step S301 and step S302, refer to the process in step S201 and step S202. Details are not described herein.

S303: Perform accuracy verification on the device position information and passenger part position information in the passenger feature information.

The device position information obtained based on the device data is position information in a vehicle coordinate system, and the passenger part position information obtained based on the in-vehicle image is position information in a camera coordinate system. To verify accuracy of the device position information and the passenger part position information, and facilitate subsequent control adjustment on a control object by a control unit, in this embodiment of this application, the device position information and the passenger part position information may be converted into a common coordinate system.

In an example, the common coordinate system may be a camera coordinate system, or may be a vehicle coordinate system. In some examples, the common coordinate system may alternatively be independent of a coordinate system other than the camera coordinate system and the vehicle coordinate system. This may be specifically set based on an actual requirement. This is not limited in this application.

To facilitate control adjustment on the control object by the control unit, in this embodiment of this application, the device position information and the passenger part position information may be converted into the vehicle coordinate system, that is, the common coordinate system is the vehicle coordinate system.

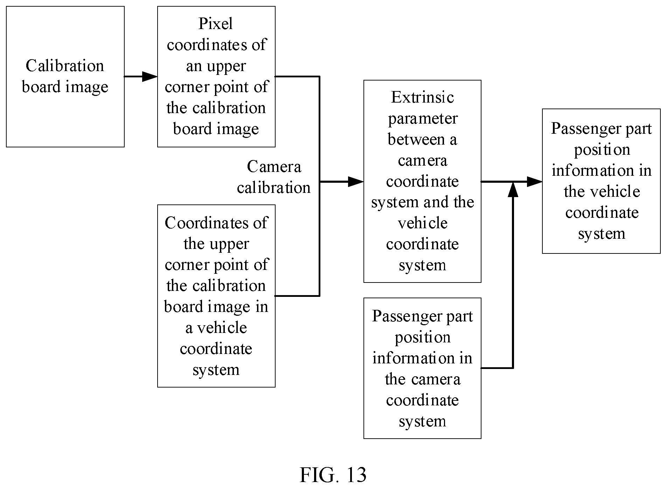

With reference to FIG. 13, a calibration board may be disposed in the vehicle, and the calibration board is photographed by using a camera in the vehicle, to obtain a calibration board image. An extrinsic parameter between the camera coordinate system and the vehicle coordinate system is obtained based on pixel coordinates of an upper corner point of the calibration board image and coordinates of the upper corner point of the calibration board image in the vehicle coordinate system. For details, refer to a conventional technology. Details are not described herein. After the extrinsic parameter between the camera coordinate system and the vehicle coordinate system is obtained, the passenger part position information in the camera coordinate system can be converted into the vehicle coordinate system by using the extrinsic parameter, to obtain passenger part position information in the vehicle coordinate system.

It may be understood that the foregoing is merely an example description of determining the extrinsic parameter between the camera coordinate system and the vehicle coordinate system in this embodiment of this application, and is not intended to limit a manner of determining the extrinsic parameter between the camera coordinate system and the vehicle coordinate system. In some examples, the extrinsic parameter between the camera coordinate system and the vehicle coordinate system may be obtained in another manner, for example, may be read from a vehicle digital model.

After the passenger part position information and the position information of the in-vehicle device are converted into a same coordinate system, it may be detected, in the same coordinate system, whether the passenger part position information and the device position information are accurate.

For example, it may be detected, based on a preset relative position relationship between a passenger body and an in-vehicle device, whether the passenger part position information and the device position information are accurate. For example, a passenger hip should be located above a seat cushion. If it is detected that hip position information is located below cushion position information, it indicates that the hip position information and/or the cushion position information are/is incorrect. For another example, position information of a part such as a passenger eye, ear, or the like should be located in front of a seat headrest. If it is detected that the position information of the part such as the passenger eye, ear, or the like is located behind headrest position information, it indicates that the position information of the part such as the passenger eye, ear, or the like and/or the headrest position information are/is incorrect.

In an example, after the passenger part position information and the device position information are converted into the same coordinate system, a relative position between the passenger body and the in-vehicle device is obtained based on passenger part position information and device position information in the same coordinate system, and it is detected whether the relative position between the passenger body and the in-vehicle device conforms to the preset relative position relationship, to detect whether the passenger part position information and the device position information are accurate. If the relative position between the passenger body and the device does not conform to the preset relative position relationship, it indicates that the passenger part position information and/or the device position information are/is incorrect. If the relative position between the passenger body and the in-vehicle device conforms to the preset relative position relationship, it indicates that the passenger part position information and the device position information are accurate.

When it is detected that the passenger part position information and/or the device position information are/is incorrect, step S301 to step S303 may be performed again, that is, the device data and the in-vehicle image of the vehicle are re-obtained, the in-vehicle spatial information is obtained based on the re-obtained device data and in-vehicle image, and accuracy verification is performed on the re-obtained device position information and passenger part position information.

When it is detected that the passenger part position information and the device position information are accurate, step S304 and step S305 may be performed.

S304: Send first adjustment information to a first control unit based on a control requirement of the first control unit, where the first adjustment information includes the device position information of the in-vehicle device and/or the passenger feature information, and the first adjustment information is used by the first control unit to perform control adjustment on a first control object.

S305: Send second adjustment information to a second control unit based on a control requirement of the second control unit, where the second adjustment information includes the device position information of the in-vehicle device and/or the passenger feature information, and the second adjustment information is the same as the first adjustment information, or the second adjustment information is different from the first adjustment information.

For a process in step S304 and step S305, refer to step S203 and step S204. Details are not described herein.

It may be understood that when the first adjustment information includes the device position information and/or the passenger part position information in the passenger feature information, accuracy verification has been performed on the device position information and/or the passenger part position information. Correspondingly, when the second adjustment information includes the device position information and/or the passenger part position information in the passenger feature information, accuracy verification has been performed on the device position information and/or the passenger part position information.

In this embodiment of this application, accuracy verification is performed on the device position information and the passenger part position information with reference to the relative position relationship between the passenger body and the device, to improve accuracy of in-vehicle control information, so as to ensure control effect of the control unit on the in-vehicle device, and improve vehicle use experience of a user.

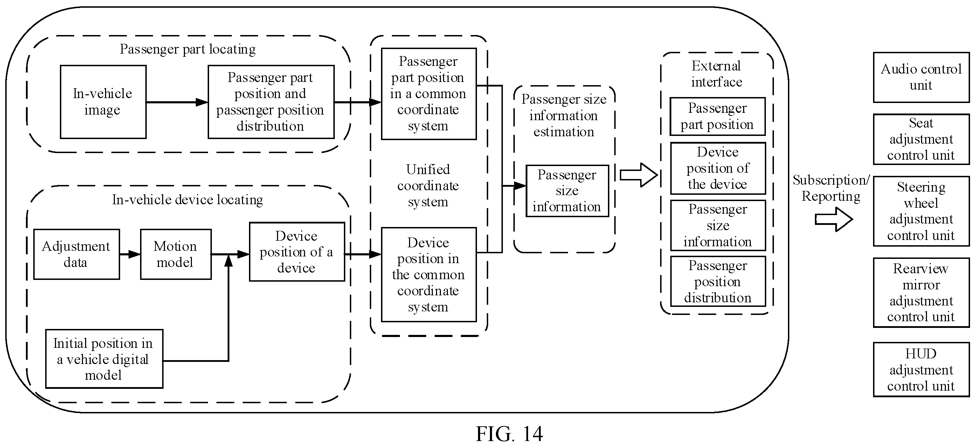

According to the vehicle information processing method in this embodiment of this application, a spatial position sensing technology for an in-vehicle person and an in-vehicle device that are used for in-vehicle interaction is provided, including spatial position locating of a human body part, passenger size information estimation, spatial position locating of an in-vehicle device, passenger position distribution, and the like. As shown in FIG. 14, an in-vehicle image may be obtained, and the in-vehicle image may be detected to obtain a passenger part position and passenger position distribution. Adjustment data of the in-vehicle device and an initial position in a vehicle digital model are obtained, and device position of the in-vehicle device is obtained based on a motion model, the adjustment data, and the initial position of the in-vehicle device. The device position of the in-vehicle device and the passenger part position are converted into a common coordinate system, to obtain a passenger part position and a device position in the common coordinate system. Passenger size information estimation is performed based on the passenger part position and the device position in the common coordinate system, to obtain passenger size information. The obtained information such as the passenger part position, the device position of the in-vehicle device, the passenger size information, the passenger position distribution, and the like are encapsulated into an interface. In this way, a control unit can subscribe to corresponding required information through a subscription interface based on a service requirement. This can be flexibly used in different interaction application scenarios and control systems to implement personalized intelligent adjustment experience for each user.

In this embodiment of this application, spatial positions of an in-vehicle passenger and the in-vehicle device are sensed, so that the control unit can adapt to a change in an in-vehicle environment in a timely manner, to implement adaptive adjustment on the in-vehicle device, and improve adjustment effect.

In this embodiment of this application, the passenger and the in-vehicle device are spatially located to estimate the passenger size information. Therefore, when control adjustment is performed by using the passenger size information, the passenger distribution information, the passenger part position information, and the device position information, personalized intelligent adjustment can be performed for each user.

Based on a same inventive concept, an embodiment of this application provides an electronic device. The electronic device includes: a memory, configured to store computer program instructions; and a processor, configured to execute the computer program instructions, to support the electronic device in implementing the functions or the steps in the foregoing vehicle information processing method.

In an example, the processor may be a central processing unit (central processing unit, CPU), or may be another specific integrated circuit. The processor may alternatively be another general-purpose processor, a digital signal processor (digital signal processor, DSP), an application-specific integrated circuit ASIC, a field programmable gate array (field programmable gate array, FPGA) or another programmable logic device, a discrete gate or transistor logic device, a discrete hardware component, or the like. In actual application, the electronic device may alternatively include a plurality of processors, and the processor may include one or more processor cores (core).

The memory is usually configured to store executable program code of a computer program. The executable program code includes instructions. The processor runs the instructions stored in the memory, to perform various functional applications. The memory includes a program storage area and a data storage area. The program storage area may store an operating system, an application program required by at least one function, and the like. The data storage area may store data created in a process of using the electronic device, and the like.

In addition, the memory may include a high-speed random access memory, and may further include a non-volatile memory, for example, at least one magnetic disk storage device, a flash memory, a universal flash storage (universal flash storage, UFS), and the like.

It may be understood that the structure listed above does not constitute a specific limitation on the electronic device. In some other embodiments of this application, the electronic device may include more or fewer components than those shown in the figure, some components may be combined, some components may be split, or different component arrangements may be used. The components may be implemented by hardware, software, or a combination of software and hardware.

In addition, an embodiment of this application further provides a vehicle, including: a memory, configured to store computer program instructions; and a processor, configured to execute the computer program instructions, to support the vehicle in implementing the functions or the steps in the foregoing vehicle information processing method.

In addition, an embodiment of this application further provides a computer-readable storage medium. The computer-readable storage medium stores computer program instructions. When the computer program instructions are executed by a processing circuit, the functions or the steps in the foregoing vehicle information processing method are implemented.

In addition, an embodiment of this application further provides a chip system. The chip system includes a processing circuit and a storage medium. The storage medium stores computer program instructions. When the computer program instructions are executed by the processing circuit, the functions or the steps in the foregoing vehicle information processing method are implemented.

In addition, an embodiment of this application further provides a computer program product including instructions. When the computer program product runs on a computer, the computer is enabled to perform the functions or the steps in the foregoing vehicle information processing method.

Based on the descriptions of the foregoing implementations, a person skilled in the art can clearly understand that for convenient and brief description, for detailed working processes of the chip system, the electronic device, the computer-readable storage medium, the computer program product including instructions, and the vehicle, refer to the corresponding process in the foregoing method embodiments. Details are not described herein.

It may be understood that the method or algorithm steps described with reference to embodiments of this application may be implemented by hardware, or may be implemented by a processor by executing software instructions. The software instructions may include a corresponding software module. The software module may be stored in a random access memory, a flash memory, an erasable programmable read-only memory, an electrically erasable programmable read-only memory, a register, a hard disk, a removable hard disk, a compact disc read-only memory, or a storage medium in any other forms. For example, the storage medium is coupled to the processor, so that the processor can read information from the storage medium and write information into the storage medium. Certainly, the storage medium may be a component of the processor. The processor and the storage medium may be located in an application-specific integrated circuit (Application-Specific Integrated Circuit, ASIC). In addition, the ASIC may be located in an electronic device. Certainly, the processor and the storage medium may alternatively exist in the electronic device as discrete components.

In an optional manner, when software is used for implementation, a form of a computer program product may be used for complete or partial implementation. The computer program product includes one or more computer instructions. When the computer program instructions are loaded and executed on a computer, the procedures or the functions according to embodiments of this application are completely or partially implemented. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk solid-state disk (SSD)), or the like.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A vehicle information processing method, wherein the method comprises:
obtaining device data and an in-vehicle image of a vehicle;
obtaining in-vehicle spatial information based on the device data and the in-vehicle image, wherein the in-vehicle spatial information comprises device position information of an in-vehicle device and passenger feature information; and
sending first adjustment information to a first control unit based on a control requirement of the first control unit, wherein the first adjustment information comprises the device position information of the in-vehicle device and/or the passenger feature information, wherein
the first adjustment information is used by the first control unit to perform control adjustment on a first control object.

2. The method according to claim 1, wherein the method further comprises:
sending second adjustment information to a second control unit based on a control requirement of the second control unit, wherein the second adjustment information comprises the device position information of the in-vehicle device and/or the passenger feature information, wherein
the second adjustment information is the same as the first adjustment information, or the second adjustment information is different from the first adjustment information.

3. The method according to claim 1 or 2, wherein obtaining the in-vehicle spatial information based on the device data and the in-vehicle image comprises:
obtaining position change data of the in-vehicle device based on current adjustment data and initial adjustment data of the in-vehicle device in the device data, and a motion model of the in-vehicle device, wherein the motion model represents a motion pattern of the in-vehicle device when adjustment data changes;
obtaining the device position information of the in-vehicle device based on the position change data of the in-vehicle device and initial position information of the in-vehicle device; and
performing object detection on the in-vehicle image to obtain the passenger feature information.

4. The method according to claim 3, wherein performing object detection on the in-vehicle image to obtain the passenger feature information comprises:
performing object detection on the in-vehicle image to obtain passenger part position information and passenger distribution information;
obtaining passenger height information based on the passenger part position information and the device position information; and
obtaining passenger size information based on the passenger height information, wherein
the passenger feature information comprises at least one of the passenger part position information, the passenger distribution information, and the passenger size information.

5. The method according to any one of claims 1 to 4, wherein when the first control unit is an audio control unit, the first adjustment information comprises at least one of device position information of a play device and device position information of a seat device in the in-vehicle device, the passenger distribution information, and passenger ear position information in the passenger part position information.

6. The method according to any one of claims 1 to 4, wherein when the first control unit is a seat adjustment control unit, the first adjustment information comprises at least one of device position information of a seat device in the in-vehicle device, the passenger size information, and passenger eye position information in the passenger part position information.

7. The method according to any one of claims 1 to 4, wherein when the first control unit is a steering wheel adjustment control unit, the first adjustment information comprises at least one of the passenger size information and passenger eye position information in the passenger part position information.

8. The method according to any one of claims 1 to 4, wherein when the first control unit is a rearview mirror adjustment control unit or a head-up display adjustment control unit, the first adjustment information comprises at least one of passenger eye position information in the passenger part position information.

9. The method according to any one of claims 1 to 8, wherein the method further comprises:
receiving a subscription request of the first control unit through a subscription interface; and
obtaining the control requirement of the first control unit based on the subscription request.

10. The method according to any one of claims 1 to 8, wherein sending the first adjustment information to the first control unit comprises:
when a call request of the first control unit is received, sending the first adjustment information to the first control unit based on a control requirement in the adjustment request.

11. The method according to any one of claims 1 to 10, wherein the method further comprises:
performing accuracy verification on the device position information and the passenger part position information in the passenger feature information based on a relative position relationship between a passenger part and a device.

12. A vehicle information processing apparatus, wherein the vehicle information processing apparatus comprises:
an obtaining module, configured to obtain device data and an in-vehicle image of a vehicle;
an information sensing module, configured to obtain in-vehicle spatial information based on the device data and the in-vehicle image, wherein the in-vehicle spatial information comprises device position information of an in-vehicle device and passenger feature information; and
an information sending module, configured to send first adjustment information to a first control unit based on a control requirement of the first control unit, wherein the first adjustment information comprises the device position information of the in-vehicle device and/or the passenger feature information, wherein
the first adjustment information is used by the first control unit to perform control adjustment on a first control object.

13. The vehicle information processing apparatus according to claim 12, wherein the information sending module is further configured to:
send second adjustment information to a second control unit based on a control requirement of the second control unit, wherein the second adjustment information comprises the device position information of the in-vehicle device and/or the passenger feature information, wherein
the second adjustment information is the same as the first adjustment information, or the second adjustment information is different from the first adjustment information.

14. The vehicle information processing apparatus according to claim 13, wherein the information sensing module is configured to:
obtain position change data of the in-vehicle device based on current adjustment data and initial adjustment data of the in-vehicle device in the device data, and a motion model of the in-vehicle device, wherein the motion model represents a motion pattern of the in-vehicle device when adjustment data changes;
obtain the device position information of the in-vehicle device based on the position change data of the in-vehicle device and initial position information of the in-vehicle device; and
perform object detection on the in-vehicle image to obtain the passenger feature information.

15. The vehicle information processing apparatus according to claim 14, wherein the information sensing module is specifically configured to:
perform object detection on the in-vehicle image to obtain passenger part position information and passenger distribution information;
obtain passenger height information based on the passenger part position information and the device position information; and
obtain passenger size information based on the passenger height information, wherein
the passenger feature information comprises at least one of the passenger part position information, the passenger distribution information, and the passenger size information.

16. The vehicle information processing apparatus according to any one of claims 12 to 15, wherein when the first control unit is an audio control unit, the first adjustment information comprises at least one of device position information of a play device and device position information of a seat device in the in-vehicle device, the passenger distribution information, and passenger ear position information in the passenger part position information.

17. The vehicle information processing apparatus according to any one of claims 12 to 15, wherein when the first control unit is a seat adjustment control unit, the first adjustment information comprises at least one of device position information of a seat device in the in-vehicle device, the passenger size information, and passenger eye position information in the passenger part position information.

18. The vehicle information processing apparatus according to any one of claims 12 to 15, wherein when the first control unit is a steering wheel adjustment control unit, the first adjustment information comprises at least one of the passenger size information and passenger eye position information in the passenger part position information.

19. The vehicle information processing apparatus according to any one of claims 12 to 15, wherein when the first control unit is a rearview mirror adjustment control unit or a head-up display adjustment control unit, the first adjustment information comprises at least one of passenger eye position information in the passenger part position information.

20. An electronic device, comprising:
a memory, configured to store computer program instructions; and
a processor, configured to execute the computer program instructions, to support the electronic device in implementing the method according to any one of claims 1 to 11.

21. A vehicle, comprising:
a memory, configured to store computer program instructions; and
a processor, configured to execute the computer program instructions, to support the vehicle in implementing the method according to any one of claims 1 to 11.

22. A computer-readable storage medium, wherein the computer-readable storage medium stores computer program instructions, and when the computer program instructions are executed by a processing circuit, the method according to any one of claims 1 to 11 is implemented.

23. A computer program product comprising instructions, wherein when the computer program product runs on a computer, the computer is enabled to perform the method according to any one of claims 1 to 11.
